(19) Europäisches Patentamt
European Patent Office
Office européen des brevets

(11) **EP 3 664 454 A1**

(12) **EUROPEAN PATENT APPLICATION**
published in accordance with Art. 153(4) EPC

(43) Date of publication:
**10.06.2020 Bulletin 2020/24**

(51) Int Cl.:
**H04N 19/54** (2014.01)     **H04N 19/109** (2014.01)
**H04N 19/51** (2014.01)     **H04N 19/176** (2014.01)
**H04N 19/70** (2014.01)

(21) Application number: **18842175.4**

(22) Date of filing: **03.07.2018**

(86) International application number:
**PCT/KR2018/007509**

(87) International publication number:
**WO 2019/027145 (07.02.2019 Gazette 2019/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2017 US 201762541088 P**

(71) Applicant: **LG Electronics Inc.**
**Seoul 07336 (KR)**

(72) Inventor: **LEE, Jaeho**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR INTER-PREDICTION MODE-BASED IMAGE PROCESSING**

(57)     Disclosed is a method and a device for inter-prediction mode-based image processing. Specifically, a method for processing an image on the basis of inter-prediction may comprise the steps of: identifying whether an affine encoding block encoded in an affine mode exists among neighboring blocks of a current block, wherein the affine mode indicates a mode for deriving a motion vector in units of pixels or units of sub-blocks by using a motion vector of a control point; and as a result of the identification, when the affine encoding block exists among the neighboring blocks, deriving a first motion vector candidate of the control point of the current block, on the basis of motion information of the affine encoding block.

[FIG. 17]

**Description**

[Technical Field]

The present disclosure relates to a still image or moving image processing method, and, more particularly, to a method of encoding/decoding a still image or moving image based on an inter prediction mode and an apparatus supporting the same.

[Background Art]

Compression encoding means a series of signal processing technologies for transmitting digitalized information through a communication line or for storing digitalized information in a form suitable for a storage medium. Media, such video, an image, and a voice, may be a target of compression encoding, particularly, a technology for performing compression encoding using video as a target is referred to as video compression.

Next-generation video content will have characteristics of a high spatial resolution, a high frame rate, and high dimensionality of scene representation. In order to process such content, technologies, such as a memory storage, a memory access rate, and processing power, will be remarkably increased.

Therefore, it is necessary to design a coding tool for more efficiently processing next-generation video content.

[Disclosure]

[Technical Problem]

In the existing compression technology of a still image or moving image, upon performing an inter frame prediction, a motion prediction is performed in a prediction block unit. In this case, in order to search the best prediction block for a current block, there is a problem in that prediction accuracy is reduced because only a translated block-based prediction method is applied although prediction blocks having various sizes are supported.

Accordingly, the disclosure provides an inter prediction-based image processing method into which various motions of an image have been incorporated in addition to a translated block-based prediction method in order to improve performance of an inter frame prediction (i.e., inter prediction).

Furthermore, the disclosure proposes a method of processing an inter prediction-based image into which motion information of a subblock or pixel unit within a block can be incorporated.

Furthermore, the disclosure proposes a method of increasing the precision of a prediction and enhancing compression performance by incorporating motion information of a subblock or pixel unit.

Furthermore, the disclosure proposes an affine motion prediction method of performing encoding/decoding using an affine motion model.

Furthermore, the disclosure proposes a method of performing an affine motion prediction using an affine motion model (or motion information) of a neighbor block coded in an affine mode.

Technical objects to be achieved in an embodiment of the disclosure are not limited to the aforementioned technical objects, and other technical objects not described above may be evidently understood by a person having ordinary skill in the art to which the disclosure pertains from the following description.

[Technical Solution]

In an aspect of the disclosure, a method of processing an image based on an inter prediction may include checking whether an affine coding block coded in an affine mode is present among neighboring blocks of a current block, wherein the affine mode indicates a mode for deriving a motion vector in a pixel unit or subblock unit using a motion vector of a control point and deriving a first motion vector predictor of a control point of the current block based on motion information of the affine coding block when, as a result of the checking, the affine coding block is present among the neighboring blocks.

Preferably, a step of checking whether the affine coding block is present may include checking whether the affine coding block is present in order of the bottom left block of the current block, the right top block of the current block, a block neighboring a right of the right top block, a block neighboring a bottom of the bottom left block, and a top left block of the current block.

Preferably, a step of deriving the first motion vector predictor may include deriving the first motion vector predictor using a motion model of an affine coding block which is a first in the order.

Preferably, the first motion vector predictor may be calculated using the width and height of the affine coding block, the motion vector of a control point of the affine coding block, and the location of the control point of the current block.

Preferably, the method may further include generating a combination motion vector predictor by combining motion vectors of neighboring blocks neighboring the control point of the current block when, as a result of the checking, the affine coding block is not present among the neighboring blocks, and adding, to a candidate list, a predetermined number of combination motion vector predictors in order of smaller divergence degree of motion vectors among the combination motion vector predictors.

Preferably, the method may further include extracting an affine flag indicating whether an affine mode is applied to the current block and extracting an index indicating a specific motion vector predictor in the candidate list when a block coded in the affine mode is not present among the neighboring blocks of the current block

Preferably, the method may further include generating a combination motion vector predictor by combining motion vectors of neighboring blocks neighboring the control point of the current block, and deriving a second motion vector predictor and third motion vector predictor which are a second and third in order of smaller divergence degree of motion vectors among the combination motion vector predictors.

Preferably, the method may further include adding the first motion vector predictor to the candidate list.

Preferably, the method may further include substituting the third motion vector predictor of the candidate list with the first motion vector predictor and assigning higher priority to the first motion vector predictor than to the second motion vector predictor within the candidate list.

Preferably, a step of deriving the first motion vector predictor may include deriving the first motion vector predictor using motion information of an affine coding block which is a first in a preset order between neighboring blocks, and deriving a fourth motion vector predictor using motion information of an affine coding block which is a second in the order.

Preferably, the step of deriving the first motion vector predictor may further include removing motion information overlapped between affine coding blocks among the neighboring blocks.

In another aspect of the disclosure, an apparatus for processing an image based on an inter prediction may include a neighbor block checking unit configured to check whether an affine coding block coded in an affine mode is present, wherein the affine mode indicates a mode for deriving a motion vector in a pixel un among neighboring blocks of a current block it or subblock unit using a motion vector of a control point, and a control point motion vector candidate determination unit configured to derive a first motion vector predictor of a control point of the current block based on motion information of the affine coding block when, as a result of the checking, the affine coding block is present among the neighboring blocks.

[Advantageous Effects]

According to an embodiment of the disclosure, the precision of a prediction can be improved by incorporating image distortion because an inter prediction-based image is processed using an affine transform.

Furthermore, according to an embodiment of the disclosure, the precision of a prediction can be enhanced and an additional computational load or memory access can be reduced by generating a prediction block in a subblock unit in generating the prediction block.

Furthermore, according to an embodiment of the disclosure, an index signaling bit for indicating a specific candidate of motion vector predictor candidates can be reduced and coding efficiency can be improved using an affine motion model of a neighbor block.

Effects which may be obtained in the disclosure are not limited to the aforementioned effects, and other technical effects not described above may be evidently understood by a person having ordinary skill in the art to which the disclosure pertains from the following description.

[Description of Drawings]

The accompany drawings, which are included as part of the detailed description in order to help understanding of the disclosure, provide embodiments of the disclosure and describe the technical characteristics of the disclosure along with the detailed description.

FIG. 1 is an embodiment to which the disclosure is applied and illustrates a schematic block diagram of an encoder in which the encoding of a still image or moving image signal is performed.

FIG. 2 is an embodiment to which the disclosure is applied and illustrates a schematic block diagram of a decoder in which the encoding of a still image or moving image signal is performed.

FIG. 3 is a diagram for describing a split structure of a coding unit to which the disclosure may be applied.

FIG. 4 is a diagram for describing a prediction unit to which the disclosure may be applied.

FIG. 5 is an embodiment to which the disclosure may be applied and is a diagram illustrating the direction of an inter prediction.

FIG. 6 is an embodiment to which the disclosure may be applied and illustrates integer and fractional sample locations for 1/4 sample interpolation.

FIG. 7 is an embodiment to which the disclosure may be applied and illustrates the locations of spatial candidates.

FIG. 8 is an embodiment to which the disclosure is applied and is a diagram illustrating an inter prediction method.

FIG. 9 is an embodiment to which the disclosure may be applied and is a diagram illustrating a motion compensation process.

FIG. 10 is an embodiment to which the disclosure may be applied and is a diagram for describing an affine motion model.

FIG. 11 is an embodiment to which the disclosure may be applied and is a diagram for describing an affine motion prediction method using the motion vector of a control point.

FIGS. 12 and 13 are embodiments to which the disclosure may be applied and are diagrams for describing an affine motion prediction method using the motion vector of a control point.

FIG. 14 is an embodiment to which the disclosure is applied and is a flowchart illustrating a method of encoding an image based on an inter prediction mode.

FIG. 15 is an embodiment to which the disclosure is applied and is a flowchart illustrating a method of decoding an image based on an inter prediction mode.

FIGS. 16 and 17 are embodiments to which the disclosure is applied and are diagrams for describing a method of determining a control point motion vector predictor candidate.

FIG. 18 is an embodiment to which the disclosure is applied and is a diagram for describing a method of performing an affine motion prediction using an affine motion model of a neighbor block.

FIG. 19 is an embodiment to which the disclosure may be applied and is a diagram for describing a method of determining a motion vector predictor using an affine motion model of a neighbor block.

FIG. 20 is an embodiment to which the disclosure is applied and is a flowchart illustrating a method of performing an affine motion prediction using an affine motion model of a neighbor block.

FIG. 21 is an embodiment to which the disclosure is applied and is a flowchart illustrating a method of performing an affine motion prediction using an affine motion model of a neighbor block.

FIG. 22 is an embodiment to which the disclosure is applied and is a flowchart illustrating a method of performing an affine motion prediction using an affine motion model of a neighbor block.

FIG. 23 is a diagram illustrating an inter prediction-based image processing method according to an embodiment of the disclosure.

FIG. 24 is a diagram illustrating an inter prediction unit according to an embodiment of the disclosure.

FIG. 25 is an embodiment to which the disclosure is applied and shows a content streaming system structure.

[Mode for Invention]

Hereinafter, preferred embodiments according to the disclosure are described in detail with reference to the accompanying drawings. The detailed description to be disclosed herein along with the accompanying drawings is provided to describe exemplary embodiments of the disclosure and is not intended to describe a sole embodiment in which the disclosure may be implemented. The following detailed description includes detailed contents in order to provide complete understanding of the disclosure. However, those skilled in the art will appreciate that the disclosure may be implemented even without such detailed contents.

In some cases, in order to avoid making the concept of the disclosure vague, the known structure and/or device may be omitted or may be illustrated in the form of a block diagram based on the core function of each structure and/or device.

Furthermore, common terms that are now widely used are selected as terms used in the disclosure, but terms randomly selected by the applicant are used in specific cases. In such a case, a corresponding term should not be interpreted based on only the name of a term used in the description of the disclosure because the meaning of the corresponding term is clearly described in the detailed description of a corresponding part, but should be interpreted by checking even the meaning of the corresponding term.

Specific terms used in the following description are provided to help understanding of the disclosure, and such specific terms may be changed into other forms without departing from the technical spirit of the disclosure. For example, a signal, data, a sample, a picture, a frame or a block may be properly replaced and interpreted in each coding process.

Hereinafter, in the disclosure, a "processing unit" means a unit in which a processing process of encoding/decoding, such as a prediction, a transform and/or quantization, is performed. Hereinafter, for convenience of description, a processing unit may be referred to as a "processing block" or a "block."

A processing unit may be interpreted as a meaning that includes a unit for a luma component and a unit for a chroma component. For example, the processing unit may correspond to a coding tree unit (CTU), a coding unit (CU), a prediction unit (PU) or a transform unit (TU).

Furthermore, a processing unit may be interpreted as a unit for a luma component or a unit for a chroma component. For example, the processing unit may correspond to a coding tree block (CTB), coding block (CB), prediction block (PU) or transform block (TB) for a luma component. Alternatively, the processing unit may correspond to a coding tree block (CTB), coding block (CB), prediction block (PU) or transform block (TB) for a chroma component. Furthermore, the disclosure is not limited thereto, and the processing unit may be interpreted as a meaning including a unit for a luma component and a unit for a chroma component.

Furthermore, a processing unit is not essentially limited to a square block and may be configured in a polygon form having three or more vertexes.

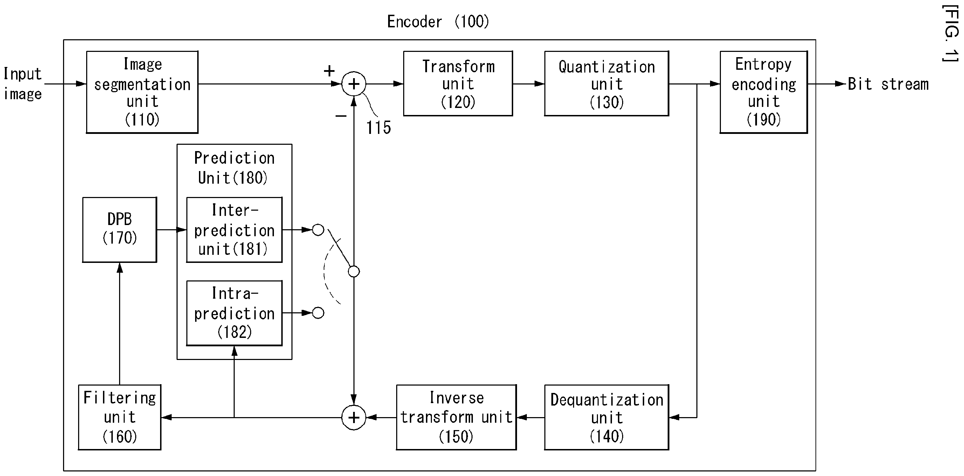

FIG. 1 is an embodiment to which the disclosure is applied and illustrates a schematic block diagram of an encoder in which the encoding of a still image or moving image signal is performed.

Referring to FIG. 1, the encoder 100 may be configured to include an image segmentation unit 110, a subtractor 115, a transform unit 120, a quantization unit 130, a dequantization unit 140, an inverse transform unit 150, a filtering unit 160, a decoded picture buffer (DPB) 170, a prediction unit 180 and an entropy encoding unit 190. Furthermore, the prediction unit 180 may be configured to include an inter prediction unit 181 and an intra prediction unit 182.

The image segmentation unit 110 segments an input image signal (or picture or frame), input to the encoder 100, into one or more processing units.

The subtractor 115 generates a residual signal (or residual block) by subtracting, from the input image signal, a prediction signal (or prediction block) output by the prediction unit 180 (i.e., the inter prediction unit 181 or the intra prediction unit 182). The generated residual signal (or residual block) is transmitted to the transform unit 120.

The transform unit 120 generates transform coefficients by applying a transform scheme (e.g., a discrete cosine transform (DCT), a discrete sine transform (DST), a graph-based transform (GBT), a Karhunen-Loeve transform (KLT)) to the residual signal (or residual block). In this case, the transform unit 120 may generate the transform coefficients by performing a transform using a prediction mode applied to the residual block and a transform scheme determined based on the size of the residual block.

The quantization unit 130 quantizes the transform coefficients and transmits them to the entropy encoding unit 190. The entropy encoding unit 190 entropy codes the quantized signal and outputs it as a bitstream.

Meanwhile, the quantized signal output by the quantization unit 130 may be used to generate a prediction signal. For example, a residual signal may be reconstructed by applying dequantization and an inverse transform to the quantized signal through the dequantization unit 140 and the inverse transform unit 150 within a loop. A reconstructed signal may be generated by adding the reconstructed residual signal to the prediction signal output by the inter prediction unit 181 or the intra prediction unit 182.

Meanwhile, an artifact in which a block boundary appears may occur because neighbor blocks are quantized by different quantization parameters in such a compression process. Such a phenomenon is called a blocking artifact, which is one of important elements for evaluating picture quality. In order to reduce such an artifact, a filtering process may be performed. Picture quality can be improved by removing the blocking artifact and also reducing an error of a current picture through such a filtering process.

The filtering unit 160 applies filtering to the reconstructed signal and outputs it to a playback device or transmits it the decoded picture buffer 170. The filtered signal transmitted to the decoded picture buffer 170 may be used as a reference picture in the inter prediction unit 181. As described above, not only picture quality, but coding efficiency can be enhanced because the filtered picture is used as a reference picture in an inter prediction mode.

The decoded picture buffer 170 may store the filtered picture in order to use it as a reference picture in the inter prediction unit 181.

The inter prediction unit 181 performs a temporal prediction and/or a spatial prediction in order to remove temporal redundancy and/or spatial redundancy with reference to a reconstructed picture.

In this case, the reference picture used to perform the prediction is a transformed signal on which quantization and dequantization have been performed in a block unit upon pervious encoding/decoding. Accordingly, a blocking artifact or a ringing artifact may be present.

Accordingly, in order to solve the discontinuity of a signal or performance degradation attributable to quantization, the inter prediction unit 181 may interpolate a signal between pixels in a subpixel unit by applying a lowpass filter. In this case, the subpixel means a virtual pixel generated by applying an interpolation filter, and an integer pixel means an actual pixel present in a reconstructed picture. Linear interpolation, bi-linear interpolation or a Wiener filter may be applied as an interpolation method.

The interpolation filter can improve the precision of a prediction by being applied to a reconstructed picture. For example, the inter prediction unit 181 may generate an interpolation pixel by applying the interpolation filter to an integer pixel, and may perform a prediction using an interpolated block configured with interpolated pixels as a prediction block.

The intra prediction unit 182 predicts a current block with reference to neighbor samples of a block on which coding is to be performed. The intra prediction unit 182 may perform the following process in order to perform an intra prediction. First, a reference sample necessary to generate a prediction signal may be prepared. Furthermore, a prediction signal may be generated using the prepared reference sample. Thereafter, the prediction mode is coded. In this case, the reference sample may be prepared through reference sample padding and/or reference sample filtering. The reference sample may include a quantization error because a prediction and a reconstruction process have been performed on the reference sample. Accordingly, in order to reduce such an error, a reference sample filtering process may be performed on each prediction mode used for an intra prediction.

The prediction signal (or prediction block) generated through the inter prediction unit 181 or the intra prediction unit 182 may be used to generate a reconstructed signal (or reconstructed block) or to generate a residual signal (or residual block).

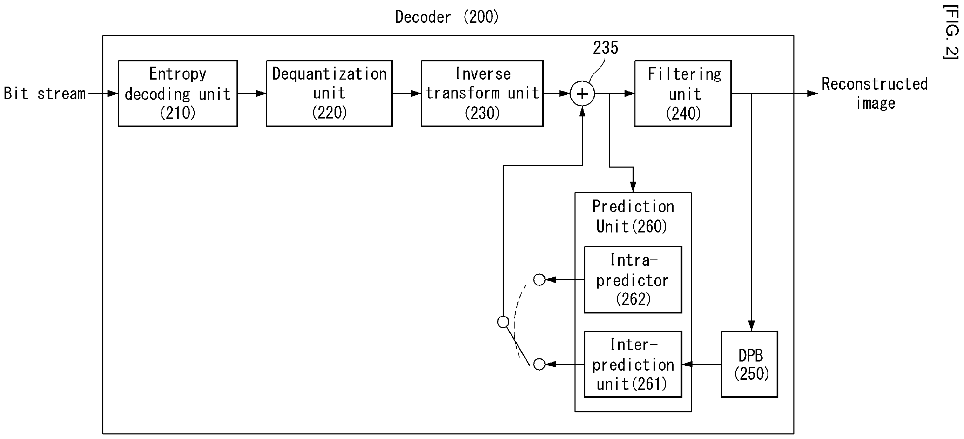

FIG. 2 is an embodiment to which the disclosure is applied and illustrates a schematic block diagram of a decoder in which the encoding of a still image or moving image signal is performed.

Referring to FIG. 2, the decoder 200 may be configured to include an entropy decoding unit 210, a dequantization unit 220, a transform unit 230, an adder 235, a filter 240, a decoded picture buffer (DPB) unit 250, and a prediction unit 260. Furthermore, the prediction unit 260 may be configured to include an inter prediction unit 261 and an intra prediction unit 262.

Furthermore, a reconstructed image signal output through the decoder 200 may be played back through a playback device.

The decoder 200 receives a signal (i.e., bitstream) output by the encoder 100 of FIG. 1. The received signal is entropy-decoded through the entropy decoding unit 210.

The dequantization unit 220 obtains transform coefficients from the entropy-decoded signal using quantization step size information.

The transform unit 230 obtains a residual signal (or residual block) by inverse-transforming the transform coefficients using an inverse transform scheme.

The adder 235 adds the obtained residual signal (or residual block) to a prediction signal (or prediction block) output by the prediction unit 260 (i.e., the inter prediction unit 261 or the intra prediction unit 262), thereby generating a reconstructed signal (or reconstructed block).

The filter 240 applies filtering to a reconstructed signal (or reconstructed block) and outputs it to a playback device or transmits it the decoded picture buffer unit 250. The filtered signal transmitted to the decoded picture buffer unit 250 may be used as a reference picture in the inter prediction unit 261.

In the disclosure, the embodiments described in the filtering unit 160, inter prediction unit 181 and intra prediction unit 182 of the encoder 100 may be identically applied to the filter 240, inter prediction unit 261 and intra prediction unit 262 of the decoder, respectively.

Processing unit split structure

In general, a block-based image compression method is used in a still image or moving image compression technology (e.g., HEVC). The block-based image compression method is a method of splitting an image in a specific block unit and processing the images, and can reduce the use of a memory and a computational load.

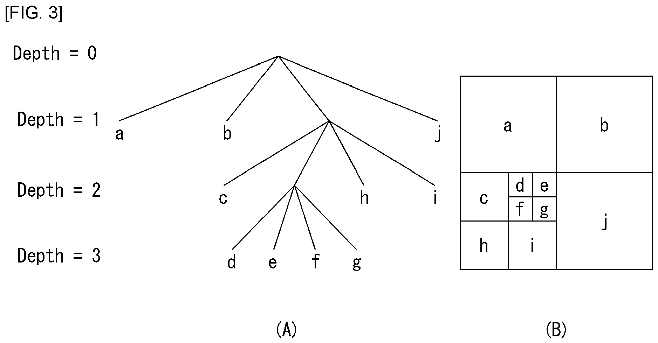

FIG. 3 is a diagram for describing a split structure of a coding unit to which the disclosure may be applied.

The encoder splits one image (or picture) in a coding tree unit (CTU) unit of a quadrangle form. Furthermore, the encoder sequentially encodes the image one CTU at a time according to a raster scan order.

In HEVC, the size of a CTU may be determined as any one of 64×64, 32×32, or 16×16. The encoder may select and use the size of a CTU depending on resolution of an input image or the characteristics of the input image. The CTU includes a coding tree block (CTB) for a luma component and a CTB for two chroma components corresponding to the luma component.

One CTU may be split in a quad-tree structure form. That is, one CTU may be split into four units each having a half horizontal size and a half vertical size while having a square form, so a coding unit (CU) may be generated. The split of such a quadtree structure may be recursively performed. That is, the CU is hierarchically split from one CTU in a quadtree structure form.

A CU means a basic unit of coding in which a processing process of an input image, for example, an intra/inter prediction is performed. A CU includes a coding block (CB) for a luma component and a CB for two chroma components corresponding to the luma component. In HEVC, the size of a CU may be determined as any one of 64×64, 32×32, 16×16, or 8×8.

Referring to FIG. 3, the root node of a quadtree is related to a CTU. The quadtree is split until a leaf node is reached, and the leaf node corresponds to a CU.

More specifically, the CTU corresponds to the root node and has the smallest depth (i.e., depth=0) value. The CTU may not be split depending on a characteristic of an input image. In this case, the CTU corresponds to a CU.

The CTU may be split in a quadtree form. As a result, lower nodes each having a depth 1 (depth=1) are generated. Furthermore, a node (i.e., leaf node) no longer split from a lower node having the depth of 1 corresponds to a CU. For example, in FIG. 3(b), a CU(a), CU(b), and CU(j) corresponding to nodes a, b and j have been split once from the CTU, and have a depth of 1.

Any one of the nodes having the depth of 1 may be split in a quadtree form. As a result, lower nodes having a depth 2 (i.e., depth=2) are generated. Furthermore, a node (i.e., leaf node) no longer split from the lower node having the depth of 2 corresponds to a CU. For example, in FIG. 3(b), a CU(c), CU(h), and CU(i) corresponding to nodes c, h and i have been split twice from the CTU, and have the depth of 2.

Furthermore, at least any one of the nodes having the depth of 2 may be split in a quadtree form. As a result, lower nodes having a depth 3 (i.e., depth=3) are generated. Furthermore, a node (i.e., leaf node) no longer split from the lower node having the depth of 3 corresponds to a CU. For example, in FIG. 3(b), a CU(d), CU(e), CU(f), and CU(g) corresponding to nodes d, e, f, and g have been split three times from the CTU, and have the depth of 3.

The encoder may determine a maximum size or minimum size of a CU depending on a characteristic (e.g., resolution) of a video image or by taking into consideration efficiency of coding. Furthermore, corresponding information or information on which the maximum size or minimum size can be derived may be included in a bitstream. A CU having a maximum size may be referred to as the largest coding unit (LCU), and a CU having a minimum size may be referred to as the smallest coding unit (SCU).

Furthermore, a CU having a tree structure may be hierarchically split with predetermined maximum depth information (or maximum level information). Furthermore, each split CU may have depth information. The depth information indicates the split number and/or degree of a CU, and may include information related to the size of the CU.

Since the LCU is split in a quadtree form, the size of the SCU may be obtained using the size of the LCU and maximum depth information. Alternatively, the size of the LCU may be obtained using the size of the SCU and maximum depth information of a tree.

Information (e.g., split CU flag (split_cu_flag)) indicating whether one CU is split may be transmitted to the decoder. The split mode is included in all CUs except the SCU. For example, when a value of the flag indicating whether a CU is split is "1", the corresponding CU may be split into 4 CUs again. When a value of the flag indicating whether a CU is split is "0", the corresponding CU is no longer split, and a processing process may be performed on the corresponding CU.

As described above, a CU is a basic unit of coding in which an intra prediction or an inter prediction is performed. In HEVC, a CU is split in a prediction unit (PU) unit in order to code an input image more effectively.

A PU is a basic unit in which a prediction block is generated. A prediction block may be differently generated in a PU unit within one CU. In this case, in PUs belonging to one CU, an intra prediction and an inter prediction are not mixed and used. Pus belonging to one CU are coded using the same prediction method (i.e., intra prediction or inter prediction).

A PU is not split in a quadtree structure form, and is once split in a predetermined form from one CU. This is described with reference to the following figure.

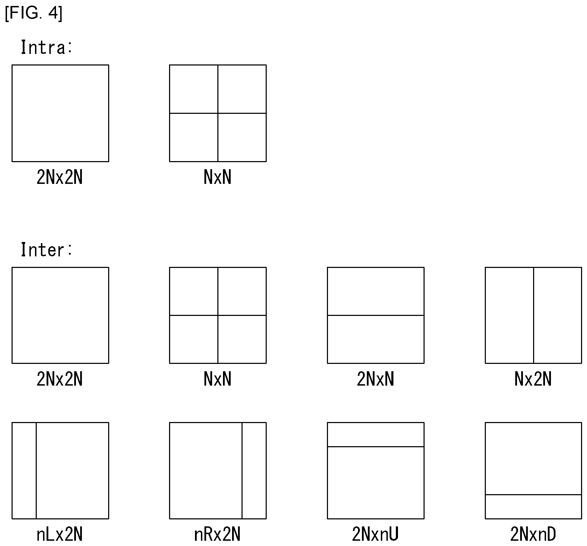

FIG. 4 is a diagram for describing a prediction unit to which the disclosure may be applied.

A PU is differently split depending on whether an intra prediction mode or inter prediction mode is used as a coding mode of a CU to which the PU belongs.

FIG. 4(a) illustrates a PU if an intra prediction mode is used, and FIG. 4(b) illustrates a PU if an inter prediction mode is used.

Referring to FIG. 4(a), assuming that one size of a CU is 2N×2N (N=4, 8, 16, 32), one CU may be split into 2 types (i.e., 2N×2N or N×N).

In this case, if one CU is split into Pus of a 2N×2N form, this means that only one PU is present within the one CU.

In contrast, if one CU is split into Pus of an N×N form, the one CU is split into four PUs. A different prediction block is generated for each PU unit. In this case, the split of such a PU may be performed only if the size of a CB for the luma component of a CU is a minimum size (i.e., only if the CU is the SCU).

Referring to FIG. 4(b), assuming that the size of one CU is 2N×2N (N=4, 8, 16, 32), the one CU may be split into 8 PU types (i.e., 2N×2N, N×N, 2N×N, N×2N, nL×2N, nR×2N, 2N×nU, 2N×nD).

As in an intra prediction, a PU split of an N×N form may be performed only if the size of a CB for the luma component of a CU is a minimum size (i.e., only if the CU is the SCU).

In an inter prediction, the PU splits of an 2N×N form split in a traverse direction and an N×2N form split in a longitudinal direction are supported.

Furthermore, the PU splits of nL×2N, nR×2N, 2N×nU, and 2N×nD forms, that is, asymmetric motion partition (AMP) forms, are supported. In this case, "n" means a 1/4 value of 2N. In this case, the AMP cannot be used if a CU to which a PU belongs is a CU having a minimum size.

In order to efficiently encode an input image within one CTU, an optimal split structure of a coding unit (CU), prediction unit (PU), or transform unit (TU) may be determined based on a minimum rate-distortion value through the following execution process. For example, Referring to the best CU split process within a 64×64 CTU, a rate-distortion cost may be calculated through a split process from a CU having a 64×64 size to a CU having an 8×8 size. A detailed process is as follows.

1) The split structure of the best PU and TU that generates a minimum rate-distortion value is determined through the execution of an inter/intra prediction, transform/quantization, dequantization/inverse transform and entropy encoding for a CU having an 64×64 size.

2) The 64×64 CU is split into four CUs each having a 32×32 size, and the split structure of the best PU and TU that generates a minimum rate-distortion value for the 32×32 CU is determined.

3) The 32×32 CU is split into four CUs each having a 16×16 size, and the split structure of the best PU and TU that generates a minimum rate-distortion value for each 16×16 CU is determined.

4) The 16×16 CU is split into four CUs each having a 8×8 size again, and the split structure of the best PU and TU that generates a minimum rate-distortion value for each 8×8 CU is determined.

5) The split structure of the best CU is determined within a 16×16 block by comparing the sum of rate-distortion values of the 16×16 CU calculated in the process of 3) with the sum of rate-distortion values of the four 8×8 CUs calculated in the process of 4). This process is identically performed on the remaining three 16×16 CUs.

6) The split structure of the best CU is determined within a 32×32 block by comparing the sum of rate-distortion values of the 32×32 CU calculated in the process of 2) with the sum of rate-distortion values of the four 16×16 CUs obtained in the process of 5). This process is identically performed on the remaining three 32×32 CUs.

7) Finally, the split structure of the best CU is determined within a 64×64 block by comparing the sum of rate-distortion values of the 64×64 CU calculated in the process of 1) with the sum of rate-distortion values of the four 32×32 CUs obtained in the process of 6).

In the intra prediction mode, a prediction mode is selected in a PU unit. A prediction and reconfiguration are actually performed on the selected prediction mode in a TU unit.

A TU means a basic unit in which a prediction and reconfiguration are actually performed. A TU includes a transform block (TB) for a luma component and a TB for two chroma components corresponding to the luma component.

In the example of FIG. 3, as if one CTU is split in a quadtree structure form and thus a CU is generated, a TU is hierarchically split from one CU to be coded in a quadtree structure form.

A TU is split in a quadtree structure form, and thus a TU split from a CU may be split into smaller lower TUs. In HEVC, the size of a TU may be determined as any one of 32×32, 16×16, 8×8, or 4×4.

Referring back to FIG. 3, it is assumed that the root node of the quadtree is related to a CU. The quadtree is split until a leaf node is reached, and the leaf node corresponds to a TU.

More specifically, the CU corresponds to the root node and has the smallest depth (i.e., depth=0) value. The CU may not be split depending on a characteristic of an input image. In this case, the CU corresponds to a TU.

The CU may be split in a quadtree form. As a result, lower nodes having a depth 1 (depth=1) are generated. Furthermore, a node (i.e., leaf node) no longer split from the lower node having the depth of 1 corresponds to a TU. For example, in FIG. 3(b), a TU(a), TU(b), and TU(j) corresponding to nodes a, b and j have been once split from the CU, and have the depth of 1.

At least any one of the nodes having the depth of 1 may be split again in a quadtree form. As a result, lower nodes having a depth 2 (i.e., depth=2) are generated. Furthermore, a node (i.e., leaf node) no longer split from the lower node having the depth of 2 corresponds to a TU. For example, in FIG. 3(b), a TU(c), TU(h), and TU(i) corresponding to nodes c, h and i have been split twice from the CU, and have the depth of 2.

Furthermore, at least any one of the nodes having the depth of 2 may be split again in a quadtree form. As a result, lower nodes having a depth 3 (i.e., depth=3) are generated. Furthermore, a node (i.e., leaf node) no longer split from a lower node having a depth of 3 corresponds to a CU. For example, in FIG. 3(b), a TU(d), TU(e), TU(f), and TU(g) corresponding to nodes d, e, f, and g have been split three times from the CU, and have the depth of 3.

A TU having a tree structure may be hierarchically split with predetermined maximum depth information (or maximum level information). Furthermore, each split TU may have depth information. The depth information indicates the split number and/or degree of a TU, and thus may include information related to the size of the TU.

Information (e.g., split TU flag (split_transform_flag)) indicating whether one TU has been split may be transmitted to the decoder. The split information has been included in all TUs except a TU having a minimum size. For example, when a value of the flag indicating whether a TU is split is "1", the corresponding TU is split into four TUs again. When a value of the flag indicating whether a TU is split is "0", the corresponding TU is no longer split.

Prediction

In order to reconstruct a current processing unit on which decoding is performed, a decoded portion of a current picture or other pictures including the current processing unit may be used.

A picture (slice) using only a current picture for reconstruction, that is, on which only an intra prediction is performed, may be referred to as an intra picture or I picture (slice). In order to predict each unit, a picture (slice) using a maximum of one motion vector and reference index may be referred to as a predictive picture or P picture (slice). A picture (slice) using a maximum of two motion vectors and reference indices may be referred to as a Bi-predictive picture or B picture (slice).

An intra prediction means a prediction method for deriving a current processing block from a data element (e.g., sample value) of the same decoded picture (or slice). That is, the intra prediction means a method of predicting a pixel value of a current processing block with reference to reconstructed areas within a current picture.

Hereinafter, an inter prediction is described more specifically.

Inter prediction (or inter-frame prediction)

An inter prediction means a prediction method of deriving a current processing block based on a data element (e.g., sample value or motion vector) of a picture other than a current picture. That is, the inter prediction means a method of predicting a pixel value of a current processing block with reference to reconstructed areas within a reconstructed picture other than a current picture.

An inter prediction (or inter-picture prediction) is a technology for removing redundancy present between pictures and is chiefly performed through motion estimation and motion compensation.

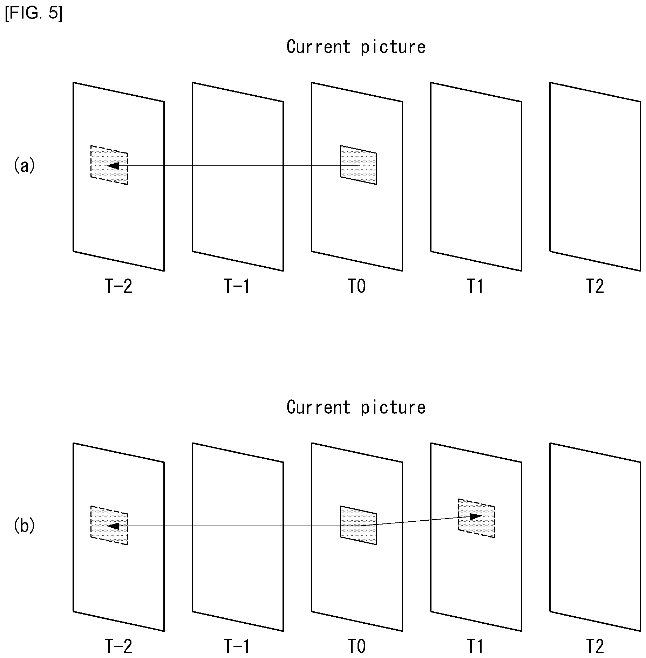

FIG. 5 is an embodiment to which the disclosure may be applied and is a diagram illustrating the direction of an inter prediction.

Referring to FIG. 5, an inter prediction may be divided into a uni-directional prediction using only one past picture or future picture for one block as a reference picture on a time axis and a bi-direction prediction for which reference is made to the past and future pictures at the same time.

Furthermore, the uni-directional prediction may be divided into a forward direction prediction using one reference picture temporally displayed (or output) prior to a current picture and a backward direction prediction using one reference picture temporally displayed (or output) after a current picture.

In an inter prediction process (i.e., uni-directional or bi-direction prediction), a motion parameter (or information) used to specify which reference area (or a reference block) is used to predict a current block includes an inter prediction mode (in this case, the inter prediction mode may indicate a reference direction (i.e., uni-directional or bi-direction) and a reference list (i.e., L0, L1 or bi-direction)), a reference index (or reference picture index or reference list index), and motion vector information. The motion vector information may include a motion vector, a motion vector predictor (MVP) or a motion vector difference (MVD). The motion vector difference means a difference between a motion vector and a motion vector predictor.

A motion parameter for a uni-direction is used in the uni-directional prediction. That is, one motion parameter may be necessary to specify a reference area (or reference block).

A motion parameter for a bi-direction is used in the bi-direction prediction. In a bi-direction prediction method, a maximum of two reference areas may be used. Two reference areas may be present in the same reference picture, and may be present in different pictures. That is, in a bi-direction prediction method, a maximum of two motion parameters may be used. Two motion vectors may have the same reference picture index or may have different reference picture indices. In this case, the reference pictures may be temporally displayed (or output) prior to a current picture or may be temporally displayed (or output) after the current picture.

The encoder performs motion estimation for finding, in reference pictures, a reference area most similarity to a current processing block in an inter prediction process. Furthermore, the encoder may provide a motion parameter for a reference area to the decoder.

The encoder/decoder may obtain the reference area of a current processing block using a motion parameter. The reference area is present within a reference picture having the reference index. Furthermore, a pixel value or interpolated value of a reference area specified by a motion vector may be used as a prediction value of the current processing block. That is, motion compensation for predicting an image of a current processing block from a previously decoded picture is performed using motion information.

In order to reduce the amount of transmission related to motion vector information, a method of obtaining a motion vector predictor (mvp) using motion information of previously coded blocks and transmitting only a corresponding difference (mvd) may be used. That is, the decoder obtains the motion vector predictor of a current processing block using pieces of motion information of decoded other blocks, and obtains a motion vector value for a current processing block using a difference transmitted by the encoder. In obtaining the motion vector predictor, the decoder may obtain various motion vector candidate values using motion information of already decoded other blocks and obtain one of them as a motion vector predictor.

- Reference picture set and the reference picture list

In order to manage multiple reference pictures, a set of previously decoded pictures is stored in the decoded picture buffer (DPB) for the decoding of the remaining pictures.

A reconstructed picture used for an inter prediction among reconstructed pictures stored in the DPB is referred to as a reference picture. In other words, the reference picture means a picture including a sample which may be used for an inter prediction in the decoding process of a next picture in a decoding sequence.

A reference picture set (RPS) means a set of reference pictures associated with a picture, and is configured with all of previously associated pictures in a decoding sequence. The reference picture set may be used for the inter prediction of an associated picture or a picture that follows an associated picture in a decoding sequence. That is, reference pictures maintained in the decoded picture buffer (DPB) may be referred to as a reference picture set. The encoder may provide the decoder with reference picture set information in a sequence parameter set (SPS) (i.e., syntax structure configured with a syntax element) or each slice header.

A reference picture list means a list of reference pictures used for the inter prediction of a P picture (or slice) or a B picture (or slice). In this case, the reference picture list may be divided into two reference picture lists, which may be referred to as a reference picture list 0 (or L0) and a reference picture list 1 (or L1), respectively. Furthermore, a reference picture belonging to the reference picture list 0 may be referred to as a reference picture 0 (or L0 reference picture). A reference picture belonging to the reference picture list 1 may be referred to as a reference picture 1 (or L1 reference picture).

In the decoding process of a P picture (or slice), one reference picture list (i.e., the reference picture list 0) is used. In the decoding process of a B picture (or slice), two reference picture lists (i.e., the reference picture list 0 and the reference picture list 1) may be used. Information for distinguishing between such reference picture lists for each reference picture may be provided to the decoder through reference picture set information. The decoder adds a reference picture to the reference picture list 0 or the reference picture list 1 based on reference picture set information.

In order to identify any one specific reference picture within a reference picture list, a reference picture index (or a reference index) is used.

- Fractional sample interpolation

A sample of a prediction block for an inter predicted current processing block is obtained from a sample value of a corresponding reference area within a reference picture identified by a reference picture index. In this case, the corresponding reference area within the reference picture indicates the area of a location indicated by the horizontal component and vertical component of a motion vector. Fractional sample interpolation is used to generate a prediction sample for non-integer sample coordinates except for a case where a motion vector has an integer value. For example, a motion vector of a 1/4 unit of a distance between samples may be supported.

In the case of HEVC, the fractional sample interpolation of a luma component applies an 8-tap filter in a traverse direction and a longitudinal direction. Furthermore, the fractional sample interpolation of a chroma component applies a 4-tap filter in a traverse direction and a longitudinal direction.

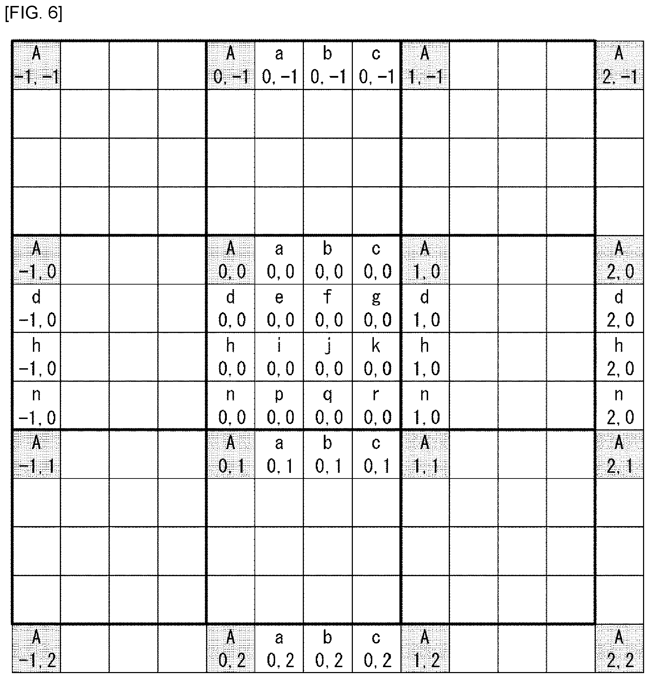

FIG. 6 is an embodiment to which the disclosure may be applied and illustrates integer and fractional sample locations for 1/4 sample interpolation.

Referring to FIG. 6, a shadow block in which an upper-case letter ($A\_i,j$) is written indicates an integer sample location, and a block not having a shadow in which a lower-case letter ($x\_i,j$) has been written indicates a fractional sample location.

A fractional sample is generated by applying an interpolation filter to each integer sample value in a horizontal direction and a vertical direction. For example, in the case of the horizontal direction, an 8-tap filter may be applied to four integer sample values on the left of a fractional sample to be generated and four integer sample values on the right of the fractional sample.

- Inter prediction mode

In HEVC, a merge mode, an advanced motion vector prediction (AMVP) may be used to reduce the amount of motion information.

1) Merge mode

A merge mode means a method of deriving a motion parameter (or information) from a spatially or temporally neighbor block.

In the merge mode, a set of available candidates is configured with spatial neighbor candidates, temporal candidates and generated candidates.

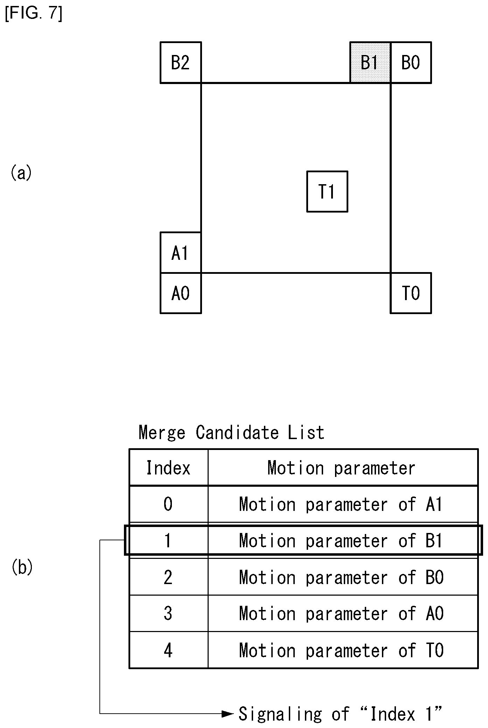

FIG. 7 is an embodiment to which the disclosure may be applied and illustrates the locations of spatial candidates.

Referring to FIG. 7(a), whether each spatial candidate block is available is determined based on the sequence of {A1, B1, B0, A0, B2}. In this case, if a candidate block is encoded in the intra prediction mode and thus motion information is not present or if a candidate block is located out of a current picture (or slice), the corresponding candidate block cannot be used.

After the validity of the spatial candidate is determined, a spatial merge candidate may be configured by excluding an unnecessary candidate block from the candidate block of a current processing block. For example, if the candidate block of a current prediction block is the first prediction block within the same coding block, candidate blocks having the same motion information may be excluded except a corresponding candidate block.

If a spatial merge candidate configuration is completed, a temporal merge candidate configuration process is performed based on the sequence of {T0, T1}.

In the temporal candidate configuration, if the right bottom block TO of the collocated block of a reference picture is available, the corresponding block is configured as a temporal merge candidate. The collocated block means a block present at a location corresponding to a current processing block in a selected reference picture. In contrast, if not, a block T1 located at the center of the collocated block is configured as a temporal merge candidate.

A maximum number of merge candidates may be specified in a slice header. If the number of merge candidates is greater than a maximum number, spatial candidates and temporal candidates having a number smaller than the maximum number are maintained. If not, an additional merge candidate (i.e., combined bi-predictive merge candidates) is generated by combining candidates added so far until the number of merge candidates becomes a maximum number.

The encoder configures a merge candidate list using such a method, and signals, to the decoder, candidate block information selected from a merge candidate list as a merge index (e.g., merge_idx[x0][y0]') by performing motion estimation. FIG. 7(b) illustrates a case where a B1 block has been selected in a merge candidate list. In this case, "index 1(Index 1)" may be signaled to the decoder as a merge index.

The decoder configures a merge candidate list identically with the encoder, and derives motion information for a current block from motion information of a candidate block, corresponding to a merge index received from the encoder, from the merge candidate list. Furthermore, the decoder generates a prediction block for a current processing block based on the derived motion information (i.e., motion compensation).

2) Advanced motion vector prediction (AMVP) mode

The AMVP mode means a method of deriving a motion vector predictor from a neighbor block. Accordingly, a horizontal and vertical motion vector difference (MVD), a reference index and an inter prediction mode are signaled to the decoder. A horizontal and vertical motion vector value is calculated using a derived motion vector predictor and a motion vector difference (MVD) provided by the encoder.

That is, the encoder configures a motion vector predictor candidate list, and signals, to the decoder, a motion reference flag (i.e., candidate block information) (e.g., mvp_IX_flag[x0][y0]') selected from the motion vector predictor candidate list by performing motion estimation. The decoder configures a motion vector predictor candidate list identically with the encoder, and derives the motion vector predictor of a current processing block using motion information of a candidate block, indicated in a motion reference flag received from the encoder, from the motion vector predictor candidate list. Furthermore, the decoder obtains the motion vector value of a current processing block using the derived motion vector predictor and a motion vector difference transmitted by the encoder. Furthermore, the decoder generates a prediction block for a current processing block based on the derived motion information (i.e., motion compensation).

In the case of the AMVP mode, in FIG. 7, two spatial motion candidates of five available candidates are selected. The first spatial motion candidate is selected from a {A0, A1} set on the left, and the second spatial motion candidate is selected from a {B0, B1, B2} set located at the top. In this case, if the reference index of a neighbor candidate block is not the same as a current prediction block, a motion vector is scaled.

If the number of selected candidates is 2 as a result of the search of spatial motion candidates, a candidate configuration is terminated. If the number of selected candidates is less than 2, a temporal motion candidate is added.

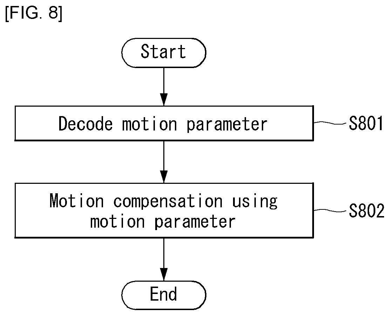

FIG. 8 is an embodiment to which the disclosure is applied and is a diagram illustrating an inter prediction method.

Referring to FIG. 8, the decoder (particularly, the inter prediction unit 261 of the decoder in FIG. 2) decodes a motion parameter for a processing block (e.g., a prediction unit) (S801).

For example, if a merge mode has been applied to the processing block, the decoder may decode a merge index signaled by the encoder. Furthermore, the decoder may derive the motion parameter of a current processing block from the motion parameter of a candidate block indicated in a merge index.

Furthermore, if the AMVP mode has been applied to the processing block, the decoder may decode a horizontal and vertical motion vector difference (MVD), a reference index and an inter prediction mode signaled by the encoder. Furthermore, the decoder may derive a motion vector predictor from the motion parameter of a candidate block indicated by a motion reference flag, and may derive the motion vector value of a current processing block using the motion vector predictor and the received motion vector difference.

The decoder performs motion compensation on a prediction unit using the decoded motion parameter (or information) (S802).

That is, the encoder/decoder performs motion compensation for predicting an image of a current unit from a previously decoded picture using the decoded motion parameter.

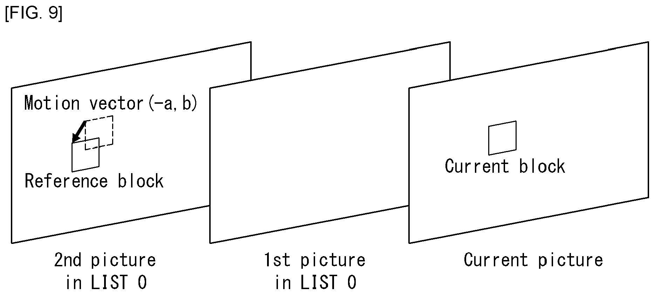

FIG. 9 is an embodiment to which the disclosure may be applied and is a diagram illustrating a motion compensation process.

FIG. 9 illustrates a case where a motion parameter for a current block to be coded in a current picture is a second picture, motion vector (-a, b) within a uni-directional prediction, LIST0, LIST0.

In this case, as in FIG. 9, the current block is predicted using a value (i.e., a sample value of a reference block) at a location spaced apart by (-a, b) from the current block in the second picture of LIST0.

In the case of a bi-direction prediction, another reference list (e.g., LIST1) and a reference index, a motion vector difference are transmitted. The decoder derives two reference blocks, and predicts a current block value based on the two reference blocks.

Embodiment 1

A common image coding technology including HEVC uses a translation motion model in order to represent a motion of a coding block. In this case, the translation motion model indicates a parallel-moved block-based prediction method. That is, motion information of a coding block is represented using one motion vector. However, the best motion vector for each pixel may be actually different within a coding block. If the best motion vector for each pixel or subblock can be determined using only small information, coding efficiency can be enhanced.

Accordingly, the disclosure proposes an inter prediction-based image processing method into which various motions of an image have been incorporated in addition to the parallel-moved block-based prediction method in order to improve performance of an inter frame prediction (i.e., inter prediction).

Furthermore, the disclosure proposes a method of enhancing the precision of a prediction and compression performance so that motion information of a subblock or pixel unit is incorporated.

Furthermore, the disclosure proposes an affine motion prediction method for performing encoding/decoding using an affine motion model. The affine motion model indicates a prediction method of deriving a motion vector in a pixel unit or subblock unit using the motion vector of a control point. The methods are described with reference to the following drawing.

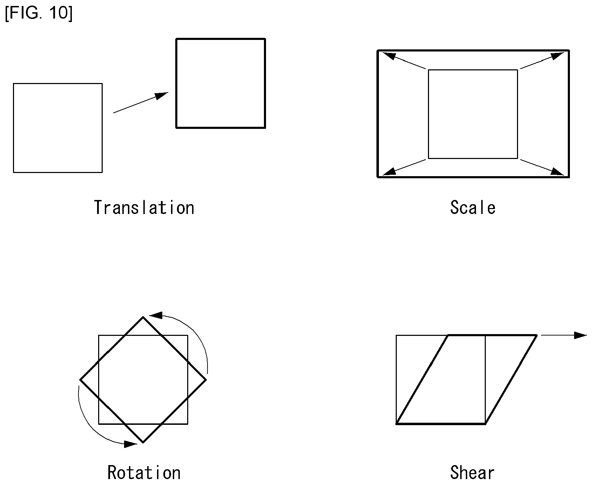

FIG. 10 is an embodiment to which the disclosure may be applied and is a diagram for describing an affine motion model.

Referring to FIG. 10, various methods may be used to represent the distortion of an image as motion information. Particularly, the affine motion model may represent four motions illustrated in FIG. 10.

That is, the affine motion model is a method of modeling the distortion of a given image caused due to the enlargement/reduction of the image, the rotation of the image or the shear of the image.

The affine motion model may be represented using various methods. The disclosure proposes a method of displaying (or identifying) distortion using motion information at a specific reference point (or reference pixel/sample) of a block and performing an inter prediction (i.e., inter prediction) using the distortion. In this case, the reference point may be referred to as a control point (CP) (or control pixel/sample). A motion vector at the reference point may be referred to as a control point motion vector (CPMV). A degree of distortion which may be represented based on the number of such control points may be different.

The affine motion model may be represented using 6 parameters a, b, c, d, e, and f as in Equation 1.

【Equation 1】
$$\begin{cases} v_x = a * x + b * y + c \\ v_y = d * x + e * y + f \end{cases}$$

In Equation 1, (x,y) indicates the location of a pixel based on the top left location of a coding block. Furthermore, $v\_x$ and $v\_y$ indicate motion vectors at (x,y). In the disclosure, as in Equation 1, the affine motion model using the 6 parameters may be referred to as an AF6.

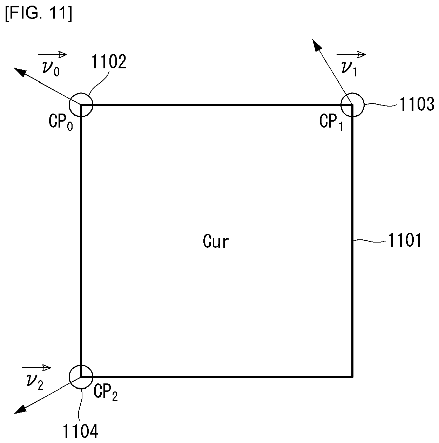

FIG. 11 is an embodiment to which the disclosure may be applied and is a diagram for describing an affine motion prediction method using the motion vector of a control point.

Referring to FIG. 11, the top left control point 1102 (may be hereinafter referred to as a first control point), top right control point 1103 (may be hereinafter referred to as a second control point) and bottom left control point 1104 (may be hereinafter referred to as a third control point) of a current block 1101 may have independent motion information. For example, the top left control point 1102 may correspond to a pixel included in the current block, and the top left control point 1102, the top right control point 1103 and the bottom left control point 1104 are not included in the current block, but may correspond to pixels neighboring the current block.

Motion information of the current block 1101 for each pixel or subblock may be derived using motion information of one or more of control points.

For example, the affine motion model using the motion vectors of the top left control point 1102, top right control point 1103 and bottom left control point 1104 of the current block 1101 may be defined like Equation 2.

【Equation 2】

$$\begin{cases} v_x = \dfrac{(v_{1x}-v_{0x})}{w} * x + \dfrac{(v_{2x}-v_{0x})}{h} * x + v_{0x} \\ v_y = \dfrac{(v_{1y}-v_{0y})}{w} * x - \dfrac{(v_{2y}-v_{0y})}{h} * y + v_{0y} \end{cases}$$

Assuming that $\overrightarrow{v_0}$ is the motion vector of the top left control point 1102, $\overrightarrow{v_1}$ is the motion vector of the top right control point 1103, and $\overrightarrow{v_2}$ is the motion vector of the bottom left control point 1104, $\overrightarrow{v_0} = \{v_{0x}, v_{0y}\}$, $\overrightarrow{v_1} = \{v_{1x}, v_{1y}\}$, $\overrightarrow{v_2} = \{v_{2x}, v_{2y}\}$ may be defined. Furthermore, in Equation 2, w indicates the width of the current block 1101, and h indicates the height of the current block 1101. Furthermore, $\overrightarrow{v} = \{v_x, v_y\}$ indicates a motion vector at an {x,y} location.

Furthermore, a similarity (or simplified) affine motion model for reducing computational complexity and optimizing a signaling bit may be defined. The similarity affine motion model may represent the three motions of translation, scale, and rotation among the motions described in FIG. 10.

The similarity affine motion model may be represented using four parameters a, b, c, and d as in Equation 3.

【Equation 3】

$$\begin{cases} v_x = a * x - b * y + c \\ v_y = b * x + a * y + d \end{cases}$$

The affine motion model using the four parameters as in Equation 3 may be referred to as an AF4. Hereinafter, in the disclosure, the AF4 is basically described for convenience of description, but the disclosure is not limited thereto. The disclosure may be identically applied to an AF6. The affine motion model of the AF4 is described with reference to the following drawing.

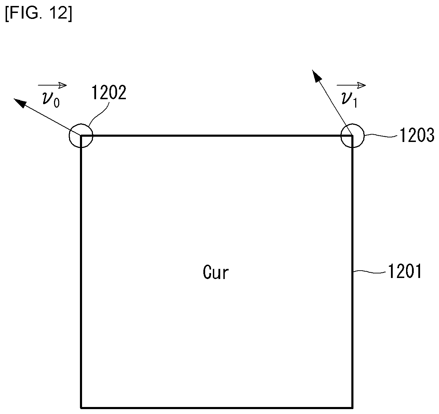

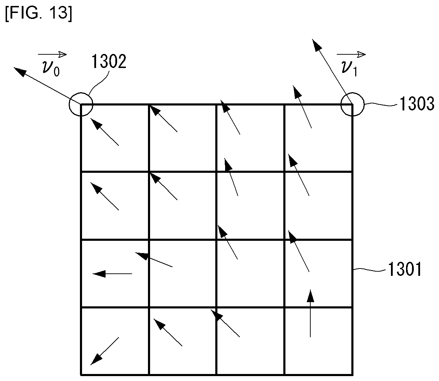

FIGS. 12 and 13 are embodiments to which the disclosure may be applied and are diagrams for describing an affine motion prediction method using the motion vector of a control point.

Referring to FIG. 12, assuming that $\overrightarrow{v_0}$ is the motion vector of the top left control point 1202 of a current block 1201 and $\overrightarrow{v_1}$ is the motion vector of the top right control point 1203 of the current block, $\overrightarrow{v_0} = \{v_{0x}, v_{0y}\}$, $\overrightarrow{v_1} = \{v_{1x}, v_{1y}\}$ may be defined. In this case, the affine motion model of the AF4 may be defined like Equation 4.

【Equation 4】

$$\begin{cases} v_x = \dfrac{(v_{1x}-v_{0x})}{w} * x - \dfrac{(v_{1y}-v_{0y})}{w} * y + v_{0x} \\ v_y = \dfrac{(v_{1y}-v_{0y})}{w} * x - \dfrac{(v_{1x}-v_{0x})}{w} * y + v_{0y} \end{cases}$$

In Equation 4, w indicates the width of the current block 1201, and h indicates the height of the current block 1201. Furthermore, $\overrightarrow{v} = \{v_x, v_y\}$ is a motion vector at an {x,y} location.

The encoder/decoder may determine (or derive) a motion vector at each pixel location using CPMVs (i.e., the motion vectors of the top left control point 1202 and the top right control point 1203. Hereinafter, in the disclosure, an affine motion vector field is defined as a set of motion vectors determined based on an affine motion prediction. Such an affine motion vector field may be determined using Equations 1 to 4.

In an encoding/decoding process, a motion vector through an affine motion prediction may be determined in a pixel unit or a pre-defined (or predetermined) block (or subblock) unit. If the motion vector is determined in a pixel unit, the motion vector may be derived based on each pixel within a processing block. If the motion vector is determined in a subblock unit, the motion vector may be derived based on each subblock unit within a current processing block. Furthermore, if the motion vector is determined in a subblock unit, the motion vector of a corresponding subblock may be derived based on a top left pixel or center pixel.

Hereinafter, in the description of the disclosure, a case where a motion vector through an affine motion prediction is determined in a block unit of a 4x4 size is basically described for convenience of description, , but the disclosure is not limited thereto. The disclosure may be applied in a pixel unit or a subblock unit of a different size.

Referring to FIG. 13, a case where the size of a current block 1301 is 16x16 is assumed. The encoder/decoder may determine a motion vector in a subblock unit of a 4x4 size using the motion vectors of the top left control point 1302 and top right control point 1303 of the current block 1301. Furthermore, the motion vector of a corresponding subblock may be determined based on a center pixel value of each subblock.

An affine motion prediction may be divided into an affine merge mode (may be hereinafter referred to as an "AF merge") and an affine inter mode (may be hereinafter referred to as an "AF inter"). In general, the affine merge mode is an encoding/decoding method using the derivation of two control point motion vectors without encoding a motion vector difference similar to the skip mode or merge mode used in the existing image coding technology. The affine inter mode is an encoding/decoding method of determining a control point motion vector predictor and a control point motion vector and then signaling a control point motion vector difference corresponding to a difference from the encoder to the decoder. In this case, in the case of the AF4, the transmission of a motion vector difference between two control points is necessary. In the case of the AF6, the transmission of a motion vector difference between three control points is necessary.

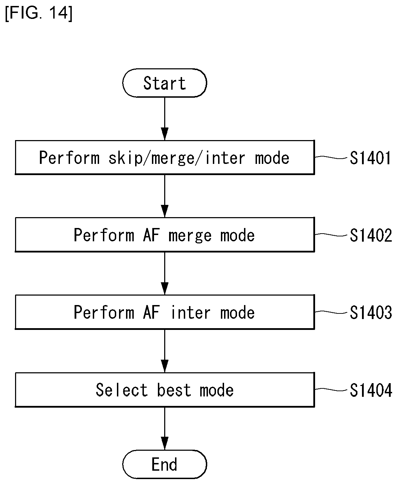

FIG. 14 is an embodiment to which the disclosure is applied and is a flowchart illustrating a method of encoding an image based on an inter prediction mode.

Referring to FIG. 14, the encoder performs (or applies) a skip mode, merge mode or inter mode to a current processing block (S1401). Furthermore, the encoder performs the AF merge mode to the current processing block (S1402), and performs the AF inter mode (S1403). In this case, the sequence of the execution of steps S1401 to S1403 may be changed.

The encoder selects the best mode applied to a current processing block among the modes performed at steps S1401 to S1403 (S1404). In this case, the encoder may determine the best mode based on a minimum rate-distortion value.

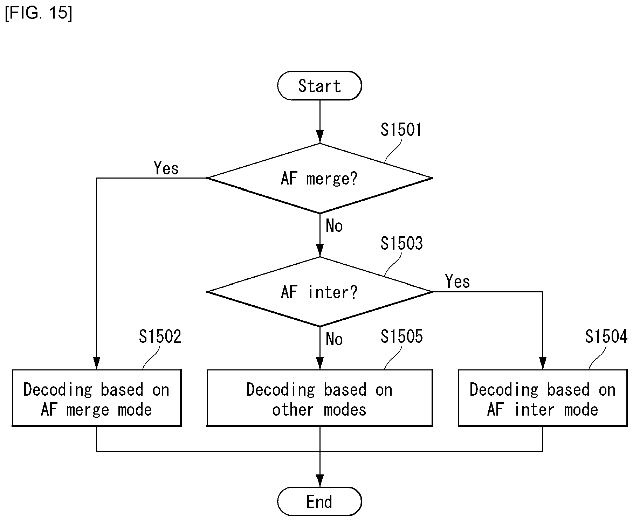

FIG. 15 is an embodiment to which the disclosure is applied and is a flowchart illustrating a method of decoding an image based on an inter prediction mode.

The decoder determines whether the AF merge mode is applied to a current processing block (S1501). If, as a result of the determination at step S1501, the AF merge mode is applied to the current processing block, the decoder performs decoding based on the AF merge mode (S1502). If the AF merge mode is applied, the decoder generates a control point motion vector predictor candidate, and may determine, as a control point motion vector, a candidate determined based on an index (or flag) value received from the encoder.

If, as a result of the determination at step S1501, the AF merge mode is not applied to the current processing block, the decoder determines whether the AF inter mode is applied (S1503). If, as a result of the determination at step S1503, the AF inter mode is applied to the current processing block, the decoder performs decoding based on the AF inter mode (S1504). If the AF inter mode is applied, the decoder may generate a control point motion vector predictor candidate, may determine a candidate using an index (or flag) value received from the encoder, and may determine a control point motion vector by adding differences of motion vector predictors received from the encoder.

If, as a result of the determination at step S1503, the AF inter mode is not applied the current processing block, the decoder performs decoding based on a mode other than the AF merge/AF inter mode (S1505).

An embodiment of the disclosure proposes a method of deriving a control point motion vector predictor in the AF inter mode. The control point motion vector predictor may be configured with two motion vector pairs of a first control point and second control point or may be configured with two control point motion vector predictor candidates. Furthermore, the encoder may signal, to the decoder, the best control point motion vector predictor index of two candidates. A method of determining two control point motion vector predictor candidates is described more specifically with reference to the following drawing.

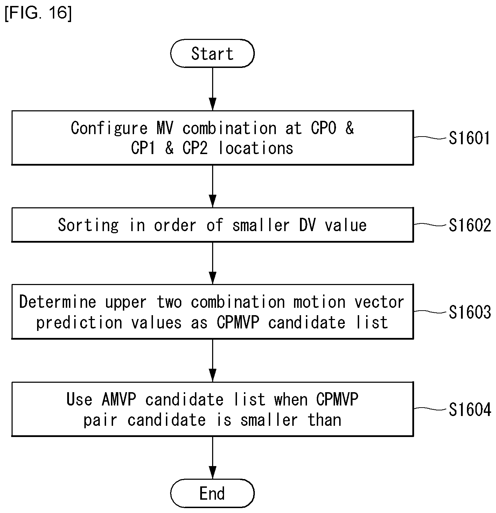

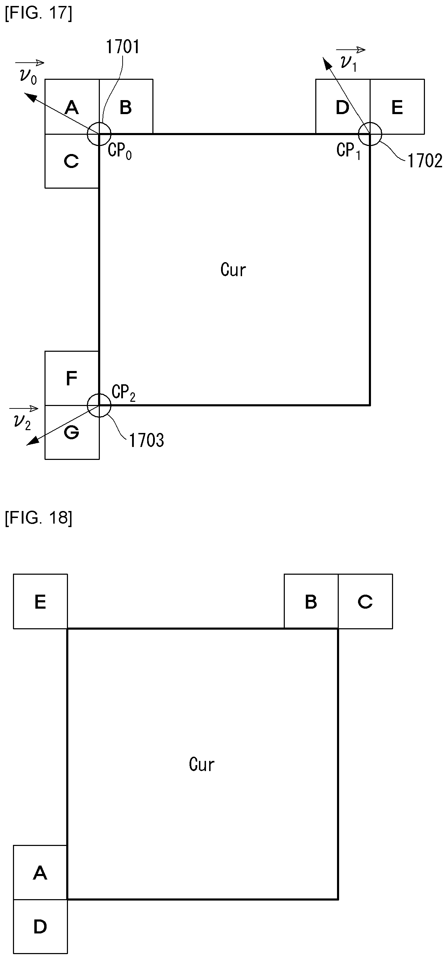

FIGS. 16 and 17 are embodiments to which the disclosure is applied and are diagrams for describing a method of determining a control point motion vector predictor candidate.

Referring to FIG. 16, the encoder/decoder generates a combination motion vector predictor, that is, a combination of the motion vector predictors of a first control point, second control point and third control point (S1601). For example, the encoder/decoder may generate a maximum of 12 combination motion vector predictors by combining the motion vectors of neighbor blocks neighboring each control point.

Referring to FIG. 17, the encoder/decoder may use the motion vectors of the top left neighbor block A, top neighbor block B and left neighbor block C of a first control point 1701 as the motion vector combination candidate of a first control point 1701. Furthermore, the encoder/decoder may use the top neighbor block D and top right neighbor block E of a second control point 1702 as the motion vector combination candidate of the second control point 1702. Furthermore, the encoder/decoder may use the left neighbor block F and bottom left neighbor block G of a third control point 1703 as the motion vector combination candidate of the third control point 1703. In this case, the neighbor blocks of each control point may be blocks having a 4x4 size. The motion vector combination of neighbor blocks neighboring each control points may be represented like Equation 5.

【Equation 5】

$$\{(v_0, v_1, v_2)|v_0 = \{v_A, v_B, v_c\}, v_1 = \{v_{D,}v_E\}, v_2 = \{v_F,v_G\}\}$$

Referring back to FIG. 16, the encoder/decoder sorts (or arranges) the combination motion vector predictors, generated at step S1601, in the order in which a divergence degree of the motion vectors of the control points is smaller (S1602). As the divergence degree of the motion vectors has a smaller value, the motion vectors of the control points may indicate the same or similar direction. In this case, the divergence degree of the motion vectors may be determined using Equation 6.

【Equation 5】

$$DV = |(v_{1x} - v_{0x}) * h - (v2_y - v0_y) * w| + |(v1_y - v0_y) * h + (v2_x - v0_x) *$$

$$w|$$

The encoder/decoder determines (or adds), as a motion vector predictor candidate list (may be hereinafter referred to as a "candidate list"), among the combination motion vector predictors sorted at step S1602 (S1603).

If the number of candidates added to the candidate list is less than 2, the encoder/decoder adds a candidate of an AMVP candidate list to the candidate list (S1604). Specifically, if the number of candidates added at step S1603 is 0, the encoder/decoder may add upper two candidates of an AMVP candidate list to the candidate list. If the number of candidates added at step S1603 is 1, the encoder/decoder may add the first candidate of an AMVP candidate list to the candidate list. Furthermore, the AMVP candidate list may be generated by applying the methods described in FIGS. 7 to 9.

Table 1 illustrates a syntax according to a method proposed in the present embodiment.

【Table 1】

```
parse merge_flag
if (merge_flag) {
    ...
    parse affine_flag // if affine_flag is TRUE, coding mode is AF_MERGE
    ...
}
else { // inter
    parse affine_flag
    if (affine_flag) { // AF_INTER
```

```
    parse aamvp_idx
    ...
    }
}
```

In Table 1, merge_flag indicates whether a merge mode is applied to a current processing block. Furthermore, affine_flag indicates whether an affine mode is applied to the current processing block. If the merge mode is applied to the current processing block, the encoder/decoder checks whether the AF merge mode is applied to the current processing block by parsing affine_flag.

If the merge mode is not applied to the current processing block, the encoder/decoder checks whether the AF inter mode is applied to the current processing block by parsing affine_flag. Furthermore, if the AF inter mode is applied to the current processing block, the encoder/decoder parses aamvp_idx indicating which one of two candidates will be used as a control point motion vector predictor.

Embodiment 2

In an embodiment of the disclosure, the encoder/decoder may perform an affine motion prediction using the affine motion model (or motion information) of a neighbor block coded in an affine mode. That is, the encoder/decoder may check whether a block coded in the affine mode is present among neighbor blocks, and may derive the motion vector predictor of a control point using the affine motion model (or motion information) of the block coded in the affine mode based on a result of the checking.

FIG. 18 is an embodiment to which the disclosure is applied and is a diagram for describing a method of performing an affine motion prediction using the affine motion model of a neighbor block.

Referring to FIG. 18, the encoder/decoder may check whether a block coded in an affine mode is present among a bottom left block A, a right top block B, a block neighboring the right of a right top block C, a block neighboring the bottom of a bottom left block D, and a top left block E.

If a neighbor affine coded block is not present, the encoder/decoder may apply the method described in Embodiment 1.

In contrast, if a neighbor affine coded block is present, the encoder/decoder may determine the control point motion vector predictor of a current block based on the affine motion model of a neighbor affine coded block, that is, the first in the sequence of the bottom left block A, the right top block B, the block neighboring the right of the right top block C, the block neighboring the bottom of the bottom left block D, and the top left block E.

If a neighbor affine coded block is not present as described above, the encoder/decoder may configure two control point motion vector predictor candidates. In this case, an index indicating a specific candidate of the two control point motion vector predictor candidates needs to be transmitted. In contrast, if a neighbor affine coded block is present, the transmission of an index may not be necessary because only one control point motion vector predictor candidate is determined by the affine motion model of the neighbor affine coded block.

Accordingly, according to an embodiment of the disclosure, an index signaling bit for indicating a specific candidate of motion vector predictor candidates can be reduced and coding efficiency can be enhanced using the affine motion model of a neighbor block.

A method of deriving a motion vector predictor based on the affine motion model of a neighbor affine coded block is described with reference to the following drawing.

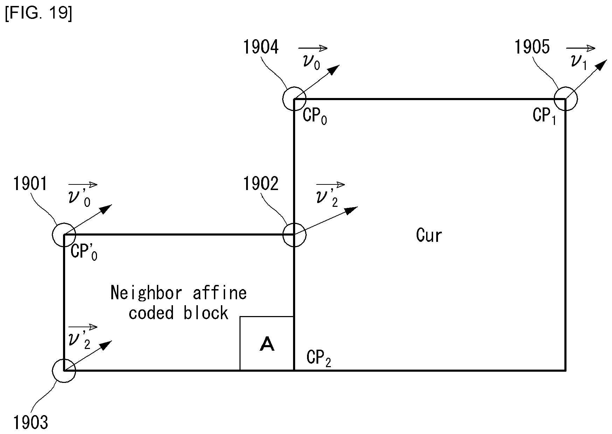

FIG. 19 is an embodiment to which the disclosure may be applied and is a diagram for describing a method of determining a motion vector predictor using the affine motion model of a neighbor block.

Referring to FIG. 19, in relation to a neighbor affine coded block, the motion vectors of a first control point 1901, a second control point 1902, and a third control point 1903 may have been determined, and the affine motion model based on Equation 2 or Equation 4 may have been determined.

In a corresponding equation, the coordinates of the first control point 1901 of the neighbor affine coded block are (0, 0). Accordingly, the motion vector predictors of the first control point 1904 and second control point 1905 of a current processing block may be derived (or obtained) by applying the coordinate values of the first control point 1904 and second control point 1905 of the current processing block based on the first control point 1901.

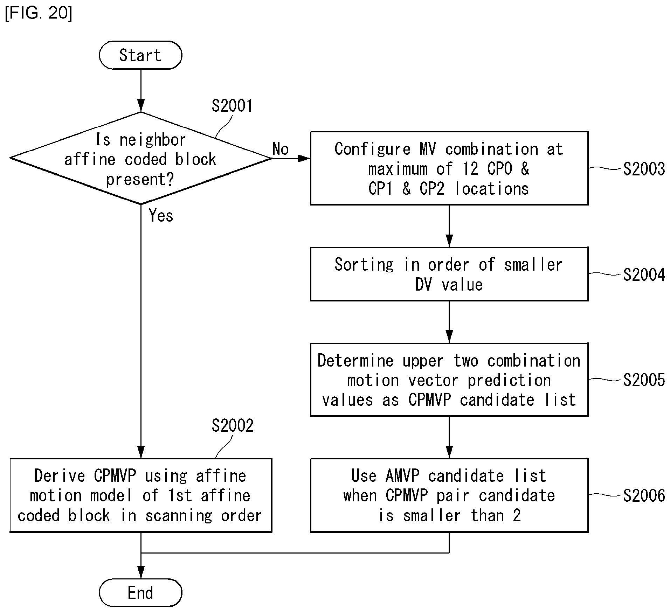

FIG. 20 is an embodiment to which the disclosure is applied and is a flowchart illustrating a method of performing an affine motion prediction using the affine motion model of a neighbor block.

Referring to FIG. 20, the encoder/decoder checks whether an affine coded block coded in an affine mode is present among neighbor blocks of a current block (S2001). In this case, the affine mode indicates a mode for deriving a motion vector in a pixel unit or subblock unit using the motion vector of a control point.

If, as a result of the checking at step S2001, the affine coded block is present among the neighbor blocks, the encoder/decoder derives a control point motion vector predictor using the affine motion model of the first affine coded block in a predetermined scan order (S2002). For example, the predetermined order may be the block sequence of the locations of the bottom left block A, the right top block B, the block neighboring the right of the right top block C, the block neighboring the bottom of the bottom left block D, and the top left block E in FIG. 18. Furthermore, as described above, the motion vector predictor of the control point of the current processing block may be derived using Equation 2 or 4.

If, as a result of the checking at step S2001, an affine coded block is not present among the neighbor blocks, the encoder/decoder may generate a motion vector predictor candidate list by applying the method described in Embodiment 1. Specifically, steps S2003 to S2006 may be performed identically with steps S1601 to S1604 of FIG. 16.

Table 2 illustrates a syntax according to a method proposed in the present embodiment.

【Table 2】

```
parse merge_flag
if (merge_flag) {
    ...
}
else { // inter
   parse affine_flag
   if (affine_flag) { // AF_INTER
      if ( ! isNeighborAffineCodedBlock( ) ) { // If a neighbour affine coded block is
not present,
         parse aamvp_idx
         ...
      }
   }
}
```

In Table 2, merge_flag indicates whether a merge mode is applied to a current processing block. Furthermore, affine_flag indicates whether an affine mode is applied to the current processing block. Furthermore, aamvp_flag indicates whether which one candidate of a candidate list of two control point motion vector predictors is used.

If the merge mode is not applied to the current processing block, the encoder/decoder checks whether the AF inter mode is applied to the current processing block by parsing affine_flag. Furthermore, the encoder/decoder checks whether an affine coded block is present among neighbor blocks of the current block. If an affine coded block is present, the encoder/decoder may determine the motion vector predictor of the control point of the current processing block using the affine motion model of a neighbor affine coded block without parsing the aamvp_flag. If an affine coded block is present, the encoder/decoder may determine a candidate applied to the current processing block within a generated candidate list by parsing the aamvp_flag.

Embodiment 3

In an embodiment of the disclosure, the encoder/decoder may configure a candidate list using the affine motion model (or motion information) of a neighbor block coded in an affine mode. If a neighbor affine coded block is present, the encoder/decoder generates the motion vector predictor of a control point using the affine motion model of one affine coded block in the case of Embodiment 2. In contrast, in the present embodiment, if a neighbor affine coded block is present, the encoder/decoder may generate a candidate list including at least two control point motion vector predictor candidates.

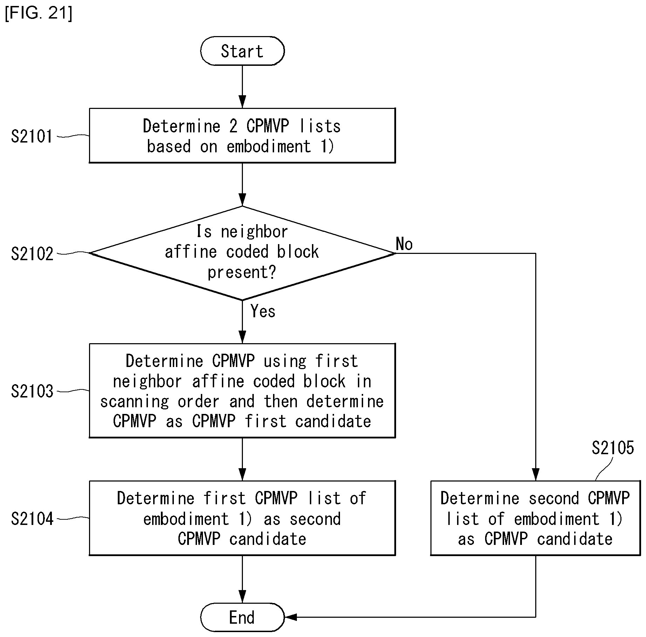

FIG. 21 is an embodiment to which the disclosure is applied and is a flowchart illustrating a method of performing an affine motion prediction using the affine motion model of a neighbor block.

Referring to FIG. 21, the encoder/decoder determines two control point motion vector predictor candidates by applying the method described in Embodiment 1 (S2101).

The encoder/decoder checks whether a block coded in the affine mode is present among neighbor blocks of a current processing block (S2102).

If, as a result of the checking at step S2101, an affine coded block is present among the neighbor blocks, the encoder/decoder determines (or derives) a control point motion vector predictor using the affine motion model of the first affine coded block in a predetermined scan order, and determines the determined control point motion vector predictor as the first candidate of a candidate list (S2103). For example, the predetermined order may be the block sequence of the bottom left block A, the right top block B, the block neighboring the right of the right top block C, the block neighboring the bottom of the bottom left block D, and the top left block E location in FIG. 18. Furthermore, as described above, the encoder/decoder may derive the motion vector predictor of the control point of the current processing block using Equation 2 or 4.

The encoder/decoder determines, as the second candidate of the candidate list, the first candidate determined at step S2101 (S2104).

If, as a result of the checking at step S2102, an affine coded block is not present among the neighbor blocks, the encoder/decoder generates a candidate list by adding, to the candidate list, the two motion vector predictor candidates determined at step S2101 (S2105). In this case, steps S1601 to S1604 in FIG. 16 may be applied.

In the present embodiment, a candidate list may be generated using two motion vector predictor candidates regardless of whether a neighbor affine mode coded block is present. Accordingly, although a neighbor affine mode coded block is present, an index indicating a candidate applied to a current processing block within the candidate list may be signaled from the encoder to the decoder. Accordingly, a syntax according to a method proposed in the present embodiment may be determined like Table 1.

Embodiment 4

In an embodiment of the disclosure, the encoder/decoder may configure a candidate list using the affine motion model (or motion information) of a neighbor block coded in an affine mode. If a neighbor affine coded block is present, the encoder/decoder may determine two control point motion vector predictor candidates by considering all of neighbor affine coded blocks in the present embodiment unlike in Embodiment 2 and Embodiment 3 in which a control point motion vector predictor candidate is determined using the first affine coded block in the scan order.

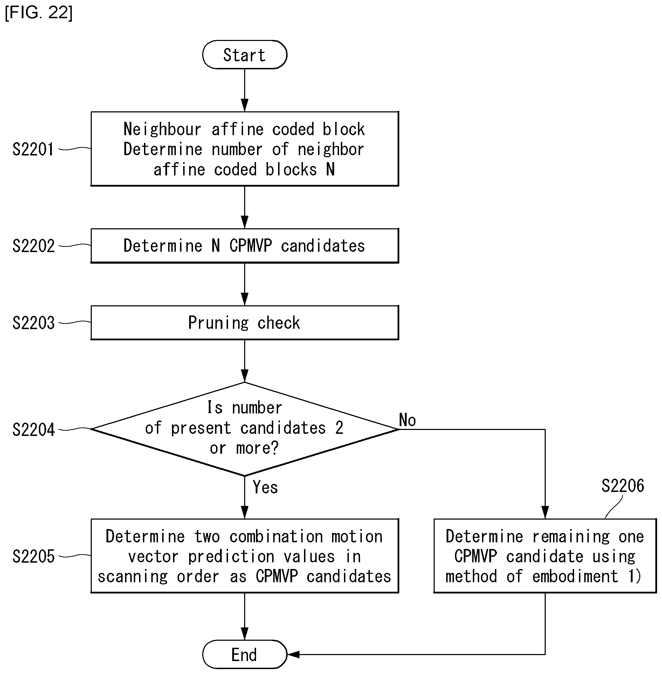

FIG. 22 is an embodiment to which the disclosure is applied and is a flowchart illustrating a method of performing an affine motion prediction using the affine motion model of a neighbor block.

Referring to FIG. 22, the encoder/decoder checks whether a block coded in an affine mode is present among neighbor blocks of a current processing block (S2201). In this case, the encoder/decoder may determine the number N of neighbor affine coded blocks.

The encoder/decoder determines N control point motion vector predictor candidates (S2202). For example, the encoder/decoder may determine an i-th candidate using an i-th neighbor affine coded block in the scan order of the locations of the bottom left block A, the right top block B, the block neighboring the right of the right top block C, the block neighboring the bottom of the bottom left block D, and the top left block E in FIG. 18. In this case, the encoder/decoder may remove an overlap motion vector (or candidate) through a pruning check (S2203).

The encoder/decoder determines whether the number of present candidate is 2 or more (S2204).

If the number of present candidate is 2 or more, the encoder/decoder determines upper two candidates in the scan order as the final control point motion vector predictor candidate (S2205). If the number of present candidate is less than 2, the encoder/decoder determines two control point motion vector predictor candidates by applying the method described in Embodiment 1 (S2206).

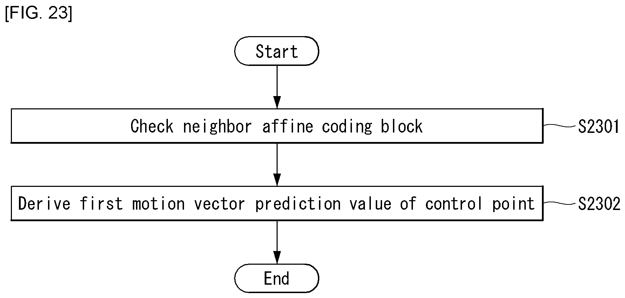

FIG. 23 is a diagram illustrating an inter prediction-based image processing method according to an embodiment of the disclosure.

Referring to FIG. 23, the decoder checks whether an affine coded block coded in an affine mode is present among neighbor blocks of a current block (S2301). In this case, the affine mode indicates a mode for deriving a motion vector in a pixel unit or subblock unit using the motion vector of a control point.

As described above, the decoder may check the affine coded block in the order of the bottom left block, right top block, block neighboring the right of the right top block, block neighboring the bottom of the bottom left block, and top left block of the current block.

If, as a result of the checking at step S2301, an affine coded block is present among the neighbor blocks, the decoder derives the first motion vector candidate of the control point of the current block based on motion information of the affine coded block (S2302).

As described above, the decoder may derive a first motion vector candidate using motion information (or motion model) of an affine coded block, that is, the first in the scan order. In this case, the first motion vector candidate may include the motion vector predictors of control points. Furthermore, the first motion vector candidate may be calculated using the affine motion model of a neighbor affine coded block. For example, the first motion vector candidate may be calculated using Equation 2 or Equation 4. That is, in calculating the first motion vector candidate, the width and height of a neighbor affine coded block, the motion vector of the control point of the affine coded block, and the location of the control point of a current block may be used.

As described above, if, as a result of the checking, an affine coded block is not present among the neighbor blocks, the decoder may determine a control point motion vector predictor candidate by applying the method of Embodiment 1. That is, if an affine coded block is not present among the neighbor blocks, the decoder may generate a combination motion vector candidate by combining the motion vectors of neighbor blocks neighboring each control point of the current block, and may add, to a candidate list, a predetermined number of combination motion vector candidates in order that a divergence degree of motion vectors is smaller among the generated combination motion vector candidates.

Furthermore, as described above in Embodiment 2, the decoder may extract an affine flag indicating whether an affine mode is applied to the current block. Furthermore, if a block coded in the affine mode is not present among the neighbor blocks of the current block, the decoder may generate a candidate list including two or more candidates. The decoder may extract an index indicating a specific motion vector candidate in the candidate list.

Furthermore, as described above in Embodiment 3, the decoder may determine a control point motion vector predictor candidate by applying the method of Embodiment 1. That is, the decoder may generate a combination motion vector candidate by combining the motion vectors of neighbor blocks neighboring each control point of a current block, and may add, to a candidate list, a second motion vector candidate, that is, the first, and a third motion vector candidate, that is, the second, in order that a divergence degree of the motion vectors is smaller among the generated combination motion vector candidates. Thereafter, the decoder may add the generated first motion vector candidate to the candidate list using the motion model of a neighbor affine coded block. In this case, a first motion vector candidate may be determined as the first candidate of the candidate list, and the second motion vector candidate may be determined as the second candidate of the candidate list. Furthermore, the third motion vector candidate may be removed from the candidate list. In other words, if an affine coded block is present among the neighbor blocks, the decoder may configure a candidate list using the first motion vector candidate and the second motion vector candidate.

Meanwhile, if an affine coded block is not present among the neighbor blocks, the decoder may configure a candidate list using the second motion vector candidate and the third motion vector candidate.

Furthermore, as described above in Embodiment 4, the decoder may configure a motion vector predictor candidate using the affine motion models of one or more neighbor affine coded blocks. If two or more neighbor affine coded blocks are present among neighbor blocks, the decoder may determine a first motion vector candidate using motion information (or motion model) of an affine coded block, that is, the first in a scan order, and may determine a fourth motion vector candidate using motion information (or motion model) of an affine coded block, that is, the second in the scan order. Furthermore, the decoder may determine the first motion vector candidate of the candidate list as the first candidate, and may finally determine the fourth motion vector candidate as the second candidate. Furthermore, as described above, the decoder may remove motion information overlapped between affine coded blocks among the neighbor blocks.

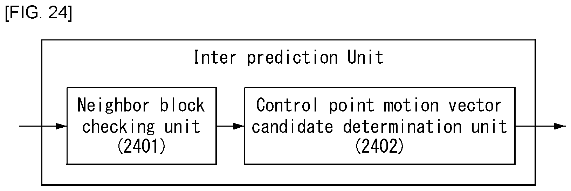

FIG. 24 is a diagram illustrating an inter prediction unit according to an embodiment of the disclosure.

FIG. 24 illustrates the inter prediction unit (181; refer to FIG. 1, 261; refer to FIG. 2) as one block, for convenience of description, but the inter prediction unit 181, 261 may be implemented as an element included in the encoder and/or the decoder.

Referring to FIG. 24, the inter prediction unit 181, 261 implements the functions, processes and/or methods proposed in FIGS. 5 to 20. Specifically, the inter prediction unit 181, 261 may be configured to include a neighbor block checking unit 2401 and a control point motion vector candidate determination unit 2402.

The neighbor block checking unit 2401 checks whether an affine coded block coded in an affine mode is present among neighbor blocks of a current block. In this case, the affine mode indicates a mode for deriving a motion vector in a pixel unit or subblock unit using the motion vector of a control point.

As described above, the neighbor block checking unit 2401 may check the affine coded block in order of the bottom left block of a current block, the right top block of the current block, a block neighboring the right of the right top block, a block neighboring the bottom of the bottom left block, and the top left block of the current block.

If, as a result of the checking by the neighbor block checking unit 2401, an affine coded block is present among the neighbor blocks, the control point motion vector candidate determination unit 2402 derives a first motion vector candidate of the control point of the current block based on motion information of the affine coded block.

As described above, the control point motion vector candidate determination unit 2402 may derive the first motion vector candidate using the motion information (or motion model) of an affine coded block, that is, the first in a scan order. In this case, the first motion vector candidate may include the motion vector predictors of control points. Furthermore, the first motion vector candidate may be calculated using the affine motion model of a neighbor affine coded block. For example, the first motion vector candidate may be calculated using Equation 2 or Equation 4. That is, in calculating the first motion vector predictor, the width and height of a neighbor affine coded block, the motion vector of the control point of the affine coded block, and the location of the control point of the current block may be used.

As described above, if, as a result of the checking, an affine coded block is not present among the neighbor blocks, the control point motion vector candidate determination unit 2402 may determine a control point motion vector predictor candidate by applying the method of Embodiment 1. That is, if an affine coded block is not present among the neighbor blocks, the control point motion vector candidate determination unit 2402 may generate a combination motion vector candidate by combining the motion vectors of neighbor blocks neighboring each control point of the current block, and may add, to a candidate list, a predetermined number of combination motion vector candidates in order that a divergence degree of motion vectors is smaller among the generated combination motion vector candidates.

Furthermore, as described above in Embodiment 2, the control point motion vector candidate determination unit 2402 may extract an affine flag indicating whether an affine mode is applied to a current block. Furthermore, if a block coded in the affine mode is not present among neighbor blocks of the current block, the control point motion vector candidate determination unit 2402 may generate a candidate list including two or more candidates. The control point motion vector candidate determination unit 2402 may extract an index indicating a specific motion vector candidate of the candidate list.

Furthermore, as described above in Embodiment 3, the control point motion vector candidate determination unit 2402 may determine a control point motion vector predictor candidate by applying the method of Embodiment 1. That is, the control point motion vector candidate determination unit 2402 may generate a combination motion vector candidate by combining the motion vectors of neighbor blocks neighboring each control point of a current block, and may add, to a candidate list, a second motion vector, that is, the first, and a third motion vector candidate, that is, the second, in order that a divergence degree of motion vectors among the generated combination motion vector candidates is smaller. Thereafter, the control point motion vector candidate determination unit 2402 may add, to the candidate list, a first motion vector candidate generated using the motion model of a neighbor affine coded block. In this case, the first motion vector candidate may be determined as the first candidate of the candidate list, and the second motion vector candidate may be determined as the second candidate of the candidate list. Furthermore, the third motion vector candidate may be removed from the candidate list. In other words, if an affine coded block is present among the neighbor blocks, the decoder may configure a candidate list using the first motion vector candidate and the second motion vector candidate.

Meanwhile, if an affine coded block is not present among the neighbor blocks, the decoder may configure a candidate list using the second motion vector candidate and the third motion vector candidate.

Furthermore, as described above in Embodiment 4, the control point motion vector candidate determination unit 2402 may configure a motion vector predictor candidate using the affine motion models of one or more neighbor affine coded blocks. If two or more neighbor affine coded blocks are present among neighbor blocks, the control point motion vector candidate determination unit 2402 may determine a first motion vector candidate using motion information (or motion model) of an affine coded block, that is, the first, in a scan order, and may determine a fourth motion vector candidate using motion information (or motion model) of an affine coded block, that is, the second in the scan order. Furthermore, the control point motion vector candidate determination unit 2402 may determine the first motion vector candidate of a candidate list as the first candidate, and may finally determine the fourth motion vector candidate as the second candidate. Furthermore, as described above, the control point motion vector candidate determination unit 2402 may remove motion information overlapped between affine coded blocks among the neighbor blocks.

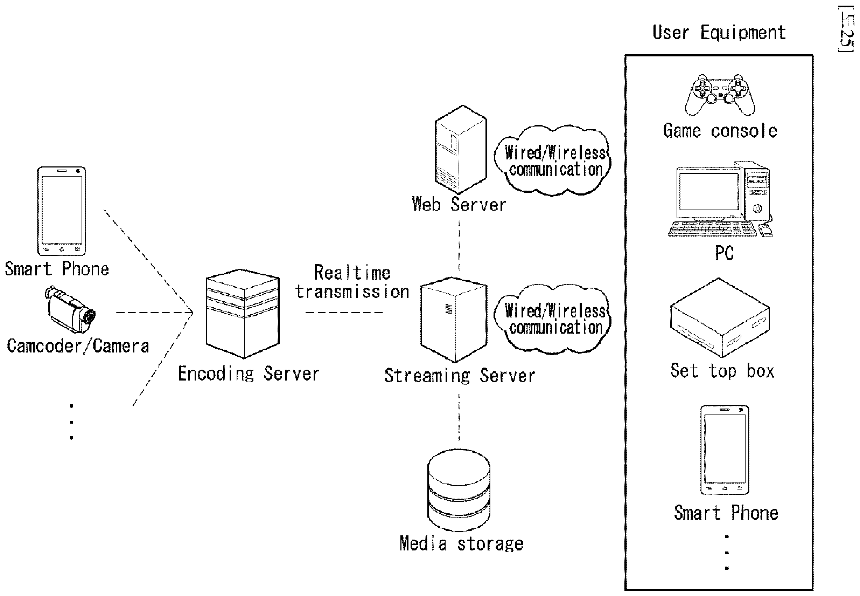

FIG. 25 is an embodiment to which the disclosure is applied and shows a content streaming system structure.

Referring to FIG. 25, the content streaming system to which the disclosure is applied may basically include an encoding server, a streaming server, a web server, a media storage, a user equipment and a multimedia input device.

The encoding server basically functions to generate a bitstream by compressing content input from multimedia input devices, such as a smartphone, a camera or a camcorder, into digital data, and to transmit the bitstream to the streaming server. For another example, if multimedia input devices, such as a smartphone, a camera or a camcorder, directly generate a bitstream, the encoding server may be omitted.

The bitstream may be generated by an encoding method or bitstream generation method to which the disclosure is applied. The streaming server may temporally store a bitstream in a process of transmitting or receiving the bitstream.

The streaming server transmits multimedia data to the user equipment based on a user request through the web server. The web server plays a role as a medium to notify a user that which service is provided. When a user requests a desired service from the web server, the web server transmits the request to the streaming server. The streaming server transmits multimedia data to the user. In this case, the content streaming system may include a separate control server. In this case, the control server functions to control an instruction/response between the apparatuses within the content streaming system.

The streaming server may receive content from the media storage and/or the encoding server. For example, if content is received from the encoding server, the streaming server may receive the content in real time. In this case, in order to provide smooth streaming service, the streaming server may store a bitstream for a given time.

Examples of the user equipment may include a mobile phone, a smart phone, a laptop computer, a terminal for digital broadcasting, personal digital assistants (PDA), a portable multimedia player (PMP), a navigator, a slate PC, a tablet PC, an ultrabook, a wearable device (e.g., a watch type terminal (smartwatch), a glass type terminal (smart glass), and a head mounted display (HMD)), digital TV, a desktop computer, and a digital signage.

The servers within the content streaming system may operate as distributed servers. In this case, data received from the servers may be distributed and processed.

As described above, the embodiments described in the disclosure may be implemented and performed on a processor, a microprocessor, a controller or a chip. For example, the function units illustrated in the drawings may be implemented and performed on a computer, a processor, a microprocessor, a controller or a chip.

Furthermore, the decoder and the encoder to which the disclosure is applied may be included in a multimedia broadcasting transmission and reception device, a mobile communication terminal, a home cinema video device, a digital cinema video device, a camera for monitoring, a video dialogue device, a real-time communication device such as video communication, a mobile streaming device, a storage medium, a camcorder, a video on-demand (VoD) service provision device, an over the top (OTT) video device, an Internet streaming service provision device, a three-dimensional (3D) video device, a video telephony device, and a medical video device, and may be used to process a video signal or a data signal. For example, the OTT video device may include a game console, a Blu-ray player, Internet access TV, a home theater system, a smartphone, a tablet PC, and a digital video recorder (DVR).

Furthermore, the processing method to which the disclosure is applied may be produced in the form of a program executed by a computer, and may be stored in a computer-readable recording medium. Multimedia data having a data structure according to the disclosure may also be stored in a computer-readable recording medium. The computer-readable recording medium includes all types of storage devices in which computer-readable data is stored. The computer-readable recording medium may include Blu-ray disk (BD), a universal serial bus (USB), a ROM, a PROM, an EPROM, an EEPROM, a RAM, a CD-ROM, a magnetic tape, a floppy disk, and an optical data storage device, for example. Furthermore, the computer-readable recording medium includes media implemented in the form of carriers (e.g., transmission through the Internet). Furthermore, a bit stream generated using an encoding method may be stored in a computer-readable recording medium or may be transmitted over wired and wireless communication networks.

Furthermore, an embodiment of the disclosure may be implemented as a computer program product using program code. The program code may be performed by a computer according to an embodiment of the disclosure. The program code may be stored on a carrier readable by a computer.

In the aforementioned embodiments, the elements and characteristics of the disclosure have been combined in a specific form. Each of the elements or characteristics may be considered to be optional unless otherwise described explicitly. Each of the elements or characteristics may be implemented in a form to be not combined with other elements or characteristics. Furthermore, some of the elements and/or the characteristics may be combined to form an embodiment of the disclosure. The sequence of the operations described in the embodiments of the disclosure may be changed. Some of the elements or characteristics of an embodiment may be included in another embodiment or may be replaced with corresponding elements or characteristics of another embodiment. It is evident that an embodiment may be constructed by combining claims not having an explicit citation relation in the claims or may be included as a new claim by amendments after filing an application.

The embodiment according to the disclosure may be implemented by various means, for example, hardware, firmware, software or a combination of them. In the case of an implementation by hardware, the embodiment of the disclosure may be implemented using one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In the case of an implementation by firmware or software, the embodiment of the disclosure may be implemented in the form of a module, procedure or function for performing the aforementioned functions or operations. Software code may be stored in the memory and driven by the processor. The memory may be located inside or outside the processor and may exchange data with the processor through a variety of known means.

It is evident to those skilled in the art that the disclosure may be materialized in other specific forms without departing from the essential characteristics of the disclosure. Accordingly, the detailed description should not be construed as being limitative, but should be construed as being illustrative from all aspects. The scope of the disclosure should be determined by reasonable analysis of the attached claims, and all changes within the equivalent range of the disclosure are included in the scope of the disclosure.

[Industrial Applicability]

The aforementioned preferred embodiments of the disclosure have been disclosed for illustrative purposes, and those skilled in the art may improve, change, substitute, or add various other embodiments without departing from the technical spirit and scope of the disclosure disclosed in the attached claims.

**Claims**

1. A method of processing an image based on an inter prediction, comprising:

   checking whether an affine coding block coded in an affine mode is present among neighboring blocks of a current block, wherein the affine mode indicates a mode for deriving a motion vector in a pixel unit or subblock unit using a motion vector of a control point; and
   deriving a first motion vector candidate of a control point of the current block based on motion information of the affine coding block when, as a result of the checking, the affine coding block is present among the neighboring blocks.

2. The method of claim 1,

wherein a step of checking whether the affine coding block is present comprises checking whether the affine coding block is present in order of a bottom left block of the current block, a right top block of the current block, a block neighboring a right of the right top block, a block neighboring a bottom of the bottom left block, and a top left block of the current block.

3. The method of claim 2,
wherein a step of deriving the first motion vector candidate comprises deriving the first motion vector candidate using a motion model of an affine coding block which is a first in the order.

4. The method of claim 1,
wherein the first motion vector candidate is calculated using a width and height of the affine coding block, a motion vector of a control point of the affine coding block, and a location of the control point of the current block.

5. The method of claim 1, further comprising:

generating a combination motion vector candidate by combining motion vectors of neighboring blocks neighboring the control point of the current block when, as a result of the checking, the affine coding block is not present among the neighboring blocks; and
adding, to a candidate list, a predetermined number of combination motion vector candidates in order of smaller divergence degree of motion vectors among the combination motion vector candidates.

6. The method of claim 5, further comprising:

extracting an affine flag indicating whether an affine mode is applied to the current block; and
extracting an index indicating a specific motion vector candidate in the candidate list when a block coded in the affine mode among the neighboring blocks is not present in the current block.

7. The method of claim 1, further comprising:

generating a combination motion vector candidate by combining motion vectors of neighboring blocks neighboring the control point of the current block; and
deriving a second motion vector candidate and third motion vector candidate which are a second and third in order of smaller divergence degree of motion vectors among the combination motion vector candidates.

8. The method of claim 7, further comprising:
generating a candidate list using the first motion vector candidate and the second motion vector candidate when, as a result of the checking, an affine coding block is present among the neighboring blocks.

9. The method of claim 7, further comprising:
generating a candidate list using the second motion vector candidate and the third motion vector candidate when, as a result of the checking, the affine coding block is not present among the neighboring blocks.

10. The method of claim 1,
wherein a step of deriving the first motion vector candidate comprises:

deriving the first motion vector candidate using motion information of an affine coding block which is a first in a preset order between neighboring blocks; and
deriving a fourth motion vector candidate using motion information of an affine coding block which is a second in the order.

11. The method of claim 10,
wherein the step of deriving the first motion vector candidate further comprises removing motion information overlapped between affine coding blocks among the neighboring blocks.

12. An apparatus for processing an image based on an inter prediction, comprising:

a neighbor block checking unit configured to check whether an affine coding block coded in an affine mode is present, wherein the affine mode indicates a mode for deriving a motion vector in a pixel un among neighboring blocks of a current block it or subblock unit using a motion vector of a control point; and
a control point motion vector candidate determination unit configured to derive a first motion vector candidate of a control point of the current block based on motion information of the affine coding block when, as a result of the checking, the affine coding block is present among the neighboring blocks.

[FIG. 1]

EP 3 664 454 A1

Encoder (100)

Input image → Image segmentation unit (110)

Transform unit (120) → Quantization unit (130) → Entropy encoding unit (190) → Bit stream

115

Prediction Unit(180)

DPB (170) → Inter-prediction unit(181)

Intra-prediction (182)

Filtering unit (160)

Inverse transform unit (150) ← Dequantization unit (140)

[FIG. 2]

Decoder (200)

Bit stream →

| Entropy decoding unit (210) | → | Dequantization unit (220) | → | Inverse transform unit (230) |

235

Filtering unit (240) → Reconstructed image

Prediction Unit(260)

Intra-predictor (262)

Inter-prediction unit(261)

DPB (250)

EP 3 664 454 A1

[FIG. 3]

Depth = 0

Depth = 1

a    b          j

Depth = 2

c      h   i

Depth = 3

d  e  f  g

(A)          (B)

[FIG. 4]

Intra:

2Nx2N     NxN

Inter:

2Nx2N     NxN     2NxN     Nx2N

nLx2N     nRx2N     2NxnU     2NxnD

[FIG. 5]

Current picture

(a)

T-2　　T-1　　T0　　T1　　T2

Current picture

(b)

T-2　　T-1　　T0　　T1　　T2

[FIG. 6]

| A<br>-1, -1 | | | | A<br>0, -1 | a<br>0, -1 | b<br>0, -1 | c<br>0, -1 | A<br>1, -1 | | | | A<br>2, -1 |
|---|---|---|---|---|---|---|---|---|---|---|---|---|
| | | | | | | | | | | | | |
| | | | | | | | | | | | | |
| | | | | | | | | | | | | |
| A<br>-1, 0 | | | | A<br>0, 0 | a<br>0, 0 | b<br>0, 0 | c<br>0, 0 | A<br>1, 0 | | | | A<br>2, 0 |
| d<br>-1, 0 | | | | d<br>0, 0 | e<br>0, 0 | f<br>0, 0 | g<br>0, 0 | d<br>1, 0 | | | | d<br>2, 0 |
| h<br>-1, 0 | | | | h<br>0, 0 | i<br>0, 0 | j<br>0, 0 | k<br>0, 0 | h<br>1, 0 | | | | h<br>2, 0 |
| n<br>-1, 0 | | | | n<br>0, 0 | p<br>0, 0 | q<br>0, 0 | r<br>0, 0 | n<br>1, 0 | | | | n<br>2, 0 |
| A<br>-1, 1 | | | | A<br>0, 1 | a<br>0, 1 | b<br>0, 1 | c<br>0, 1 | A<br>1, 1 | | | | A<br>2, 1 |
| | | | | | | | | | | | | |
| | | | | | | | | | | | | |
| | | | | | | | | | | | | |
| A<br>-1, 2 | | | | A<br>0, 2 | a<br>0, 2 | b<br>0, 2 | c<br>0, 2 | A<br>1, 2 | | | | A<br>2, 2 |

[FIG. 7]

(a)

Merge Candidate List

| Index | Motion parameter |
|-------|------------------|
| 0 | Motion parameter of A1 |
| 1 | Motion parameter of B1 |
| 2 | Motion parameter of B0 |
| 3 | Motion parameter of A0 |
| 4 | Motion parameter of T0 |

(b)

Signaling of "Index 1"

[FIG. 8]

```
              ┌─────────────┐
              │    Start    │
              └─────────────┘
                     │
                     ▼
  ┌──────────────────────────────────┐
  │      Decode motion parameter     │───── S801
  └──────────────────────────────────┘
                     │
                     ▼
  ┌──────────────────────────────────┐
  │     Motion compensation using    │───── S802
  │         motion parameter         │
  └──────────────────────────────────┘
                     │
                     ▼
              ┌─────────────┐
              │     End     │
              └─────────────┘
```

[FIG. 9]

Motion vector (−a, b)

Reference block

Current block

2nd picture
in LIST 0

1st picture
in LIST 0

Current picture

[FIG. 10]

Translation

Scale

Rotation

Shear

[FIG. 11]

[FIG. 12]

[FIG. 13]

[FIG. 14]

```
        ( Start )
            │
            ▼
┌──────────────────────────┐
│ Perform skip/merge/inter mode │ ──── S1401
└──────────────────────────┘
            │
            ▼
┌──────────────────────────┐
│    Perform AF merge mode     │ ──── S1402
└──────────────────────────┘
            │
            ▼
┌──────────────────────────┐
│    Perform AF inter mode     │ ──── S1403
└──────────────────────────┘
            │
            ▼
┌──────────────────────────┐
│      Select best mode        │ ──── S1404
└──────────────────────────┘
            │
            ▼
        ( End )
```

[FIG. 15]

```
                        ┌─────────┐
                        │  Start  │
                        └────┬────┘
                             │
                             │              S1501
                             ▼           ╱
                          ╱◇◇◇◇◇╲
              Yes       ╱         ╲
        ◄────────────◇   AF merge?  ◇
                       ╲         ╱
                        ╲◇◇◇◇◇╱
                             │ No
                             │              S1503
                             ▼           ╱
                          ╱◇◇◇◇◇╲
                        ╱         ╲        Yes
                       ◇  AF inter? ◇───────────►
                        ╲         ╱
                         ╲◇◇◇◇◇╱
                             │ No
```

| S1502 | S1505 | S1504 |
|---|---|---|
| Decoding based on AF merge mode | Decoding based on other modes | Decoding based on AF inter mode |

```
                        ┌─────────┐
                        │   End   │
                        └─────────┘
```

[FIG. 16]

```
                    ( Start )
                        |
                        v
    +-----------------------------------------+
    |  Configure MV combination at CP0 &      |----- S1601
    |        CP1 & CP2 locations              |
    +-----------------------------------------+
                        |
                        v
    +-----------------------------------------+
    |    Sorting in order of smaller DV value  |----- S1602
    +-----------------------------------------+
                        |
                        v
    +-----------------------------------------+
    | Determine upper two combination motion vector |----- S1603
    |  prediction values as CPMVP candidate list    |
    +-----------------------------------------+
                        |
                        v
    +-----------------------------------------+
    |   Use AMVP candidate list when CPMVP    |----- S1604
    |      pair candidate is smaller than     |
    +-----------------------------------------+
                        |
                        v
                    (  End  )
```

[FIG. 17]

[FIG. 18]

[FIG. 19]

[FIG. 20]

```
                    ┌─────────────┐
                    │    Start    │
                    └──────┬──────┘
                           │
                           │                S2001
                           ▼
                    ╱───────────────╲
                   ╱  Is neighbor    ╲   No      ┌───────────────────────────┐
                  ◄  affine coded block ►────────►│ Configure MV combination at│
                   ╲   present?      ╱            │    maximum of 12 CP0 &      │──── S2003
                    ╲───────────────╱             │    CP1 & CP2 locations      │
                           │ Yes                  └────────────┬──────────────┘
                           │                                   │
                           │                                   ▼
                           │                      ┌───────────────────────────┐
                           │                      │  Sorting in order of smaller│──── S2004
                           │                      │        DV value            │
                           │                      └────────────┬──────────────┘
                           │                                   │
                           │                                   ▼
                           │                      ┌───────────────────────────┐
                           │                      │ Determine upper two combination│
                           │                      │   motion vector prediction  │──── S2005
                           │                      │ values as CPMVP candidate list│
                  S2002    │                      └────────────┬──────────────┘
                           │                                   │
                           ▼                                   ▼
          ┌─────────────────────────────┐       ┌───────────────────────────┐
          │  Derive CPMVP using affine  │       │    Use AMVP candidate list │
          │ motion model of 1st affine  │       │   when CPMVP pair candidate │──── S2006
          │ coded block in scanning order│       │     is smaller than 2      │
          └──────────────┬──────────────┘       └────────────┬──────────────┘
                         │                                    │
                         ▼                                    │
                  ┌─────────────┐◄──────────────────────────┘
                  │     End     │
                  └─────────────┘
```

[FIG. 21]

```
                        ( Start )
                            |
                            v
        ┌─────────────────────────────────────┐
 S2101 ─┤   Determine 2 CPMVP lists            │
        │   based on embodiment 1)             │
        └─────────────────────────────────────┘
                            |
                            v
                      ╱────────────╲
                     ╱  Is neighbor  ╲            No
 S2102 ─────────────< affine coded block >─────────────┐
                     ╲   present?    ╱                  │
                      ╲────────────╱                    │
                            | Yes                       │
                            v                           │
        ┌─────────────────────────────────────┐        │
        │   Determine CPMVP using first        │        │
        │   neighbor affine coded block in     │        │
 S2103 ─┤   scanning order and then determine  │        │
        │   CPMVP as CPMVP first candidate     │        │
        └─────────────────────────────────────┘        │
                            |                     S2105 │
                            v                           v
        ┌─────────────────────────────┐    ┌─────────────────────────┐
        │  Determine first CPMVP list of │  │  Determine second CPMVP  │
 S2104 ─┤  embodiment 1) as second       │  │  list of embodiment 1)   │
        │  CPMVP candidate               │  │  as CPMVP candidate       │
        └─────────────────────────────┘    └─────────────────────────┘
                            |                           │
                            v                           │
                         ( End )<────────────────────────┘
```

[FIG. 22]

Start

S2201 — Neighbour affine coded block
Determine number of neighbor
affine coded blocks N

S2202 — Determine N CPMVP candidates

S2203 — Pruning check

S2204 — Is number
of present candidates 2
or more?

No

Yes

S2205 — Determine two combination motion
vector prediction values in
scanning order as CPMVP candidates

S2206
Determine remaining one
CPMVP candidate using
method of embodiment 1)

End

[FIG. 23]

```
              ┌─────────────┐
              │    Start     │
              └──────┬──────┘
                     │
                     ▼
┌───────────────────────────────────────────────┐
│      Check neighbor affine coding block         │─── S2301
└───────────────────────┬─────────────────────────┘
                        │
                        ▼
┌───────────────────────────────────────────────────┐
│ Derive first motion vector prediction value of control point │─── S2302
└───────────────────────┬───────────────────────────┘
                        │
                        ▼
              ┌─────────────┐
              │     End      │
              └─────────────┘
```

[FIG. 24]

```
+-----------------------------------------------------------+
|                  Inter prediction Unit                    |
|                                                           |
|   +------------------+    +--------------------------+    |
-->|   Neighbor block   |-->| Control point motion vector|-->
|   |  checking unit    |   | candidate determination unit|  |
|   |     (2401)        |   |          (2402)          |    |
|   +------------------+    +--------------------------+    |
|                                                           |
+-----------------------------------------------------------+
```

[FIG. 25]

User Equipment

Smart Phone

Camcoder/Camera

Encoding Server

Realtime
transmission

Web Server

Wired/Wireless communication

Streaming Server

Wired/Wireless communication

Media storage

Game console

PC

Set top box

Smart Phone

## INTERNATIONAL SEARCH REPORT

| International application No. |
|---|
| PCT/KR2018/007509 |

**A. CLASSIFICATION OF SUBJECT MATTER**

*H04N 19/109(2014.01)i, H04N 19/51(2014.01)i, H04N 19/176(2014.01)i, H04N 19/70(2014.01)i*

According to International Patent Classification (IPC) or to both national classification and IPC

**B. FIELDS SEARCHED**

Minimum documentation searched (classification system followed by classification symbols)
H04N 19/109; H04N 19/105; H04N 19/107; H04N 19/169; H04N 19/176; H04N 19/56; H04N 7/12; H04N 19/51; H04N 19/70

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: affine, motion vector, control-point, inter-prediction, coding

**C. DOCUMENTS CONSIDERED TO BE RELEVANT**

| Category* | Citation of document, with indication, where appropriate, of the relevant passages | Relevant to claim No. |
|---|---|---|
| X | CHEN, Jianle et al., "Algorithm Description of Joint Exploration Test Model 3", Joint Video Exploration Team (JVET) of ITU-T SG 16 WP 3 and ISO/IEC JTC 1/SC 29/WG 11, JVET-C1001 Ver. 3, 3rd Meeting, Geneva, CH, 01 June 2016 See sections 2.3, 2.3.6; and figures 13, 16. | 1-12 |
| X | WO 2017-118409 A1 (MEDIATEK INC.) 13 July 2017 See paragraphs [0015]-[0016], [0020]-[0025]. | 1-6 |
| A | KR 10-2017-0059423 A (ELECTRONICS AND TELECOMMUNICATIONS RESEARCH INSTITUTE et al.) 30 May 2017 See claims 1-5; and figures 15-18. | 1-12 |
| A | US 6526095 B1 (NAKAYA, Yuichiro et al.) 25 February 2003 See claim 1; and figure 3. | 1-12 |
| A | KR 10-2010-0015456 A (LG ELECTRONICS INC.) 12 February 2010 See claim 4; and figures 16-17. | 1-12 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 OCTOBER 2018 (11.10.2018) | **12 OCTOBER 2018 (12.10.2018)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2018/007509**

| Patent document cited in search report | Publication date | Patent family member | Publication date |
|---|---|---|---|
| WO 2017-118409 A1 | 13/07/2017 | CN 108432250 A | 21/08/2018 |
| | | WO 2017-118411 A1 | 13/07/2017 |
| KR 10-2017-0059423 A | 30/05/2017 | CN 108353168 A | 31/07/2018 |
| | | WO 2017-086748 A1 | 26/05/2017 |
| US 6526095 B1 | 25/02/2003 | US 2002-0186771 A1 | 12/12/2002 |
| | | US 2005-0078753 A1 | 14/04/2005 |
| | | US 2006-0239356 A1 | 26/10/2006 |
| | | US 2009-0168889 A1 | 02/07/2009 |
| | | US 6961380 B2 | 01/11/2005 |
| | | US 7139314 B2 | 21/11/2006 |
| | | US 7519117 B2 | 14/04/2009 |
| KR 10-2010-0015456 A | 12/02/2010 | CN 101653008 A | 17/02/2010 |
| | | EP 2153660 A1 | 17/02/2010 |
| | | EP 2153660 A4 | 23/01/2013 |
| | | JP 2010-524383 A | 15/07/2010 |
| | | US 2010-0215101 A1 | 26/08/2010 |
| | | WO 2008-123753 A1 | 16/10/2008 |

Form PCT/ISA/210 (patent family annex) (January 2015)